(19) Europäisches Patentamt
European Patent Office
Office européen des brevets

(11) **EP 4 403 583 A2**

(12) **EUROPEAN PATENT APPLICATION**

(43) Date of publication:
24.07.2024 Bulletin 2024/30

(51) International Patent Classification (IPC):
**C08F 210/16** (2006.01)

(21) Application number: 23215279.3

(22) Date of filing: **08.12.2023**

(52) Cooperative Patent Classification (CPC):
(C-Sets available)
**C08F 210/16;** C08F 4/65908; C08F 4/65912;
C08F 4/65916; C08F 2410/01 (Cont.)

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: 27.12.2022 JP 2022209252
08.11.2023 JP 2023190675

(71) Applicant: **Sumitomo Chemical Company Limited
Tokyo 103-6020 (JP)**

(72) Inventors:
• **YAMADA, Hidekazu
Chiba, 299-0195 (JP)**
• **NAGATE, Hotaka
Chiba, 299-0195 (JP)**

(74) Representative: **Vossius & Partner
Patentanwälte Rechtsanwälte mbB
Siebertstrasse 3
81675 München (DE)**

(54) **ETHYLENE-ALPHA-OLEFIN COPOLYMER**

(57) To provide an ethylene-$\alpha$-olefin copolymer having relatively excellent acceptability of a filler contained as a flame retardant while maintaining appropriate extrusion processability. An ethylene-$\alpha$-olefin copolymer satisfying all of the following requirements (i) to (iv) :
(i) A Vicat softening point is 85.0°C or lower;
(ii) When a melting torque at 160°C is X [N·m] and a melt flow rate is Y [g/10 min], a value of $X + 6.5 \times \mathrm{Ln}(Y)$ is 23.0 or less;

(iii) When a differential molecular weight distribution curve is divided into three normal distribution curves, a ratio of a sum of peak heights of a middle molecular weight distribution component (component B) and a high molecular weight component (component C) to a peak height of a low molecular weight component (component A) is 10.00 or more; and
(iv) A melt flow rate is 0.10 g/10 min or more and 10.00 g/10 min or less.

EP 4 403 583 A2

(52) Cooperative Patent Classification (CPC): (Cont.)

C-Sets
**C08F 210/16, C08F 4/6492;**
**C08F 210/16, C08F 4/65927;**
C08F 210/16, C08F 210/14, C08F 2500/08,
C08F 2500/10, C08F 2500/12, C08F 2500/27;
C08F 210/16, C08F 210/14, C08F 2500/08,
C08F 2500/12, C08F 2500/27

**Description**

BACKGROUND OF THE INVENTION

Field of the Invention

The present invention relates to an ethylene-$\alpha$-olefin copolymer.

Description of the Related Art

Conventionally, an ethylene-$\alpha$-olefin copolymer has been used for a food packaging material, a pharmaceutical packaging material, an electronic component packaging material, a surface protective material, an insulator for an electric wire, a cable, or the like, a sheath, and the like.

For example, JP-A-2007-023229 describes an ethylene-based resin composition containing a flame retardant and an ethylene-$\alpha$-olefin copolymer having each of flow activation energy, a melt flow rate, and a molecular weight distribution within a specific range, capable of being used for a sheath, and capable of providing an extruded product having excellent appearance and mechanical strength.

In addition, JP-A-2008-106264 describes an ethylene-$\alpha$-olefin copolymer having each of a melt flow rate, a density, flow activation energy, a molecular weight distribution, and an extraction amount of hexane in a specific range, capable of being used for a food packaging material, and having excellent molding processability and low fuming properties during melt processing.

SUMMARY OF THE INVENTION

However, when the ethylene-$\alpha$-olefin copolymer is used for an electric wire covering material or the like, the ethylene-$\alpha$-olefin copolymer is required to enhance acceptability of a filler contained as a flame retardant, that is, to contain a larger amount of filler while maintaining appropriate extrusion processability.

The present invention has been made in view of such a circumstance, and an object of the present invention is to provide an ethylene-$\alpha$-olefin copolymer having relatively excellent acceptability of a filler contained as a flame retardant while maintaining appropriate extrusion processability.

An ethylene-$\alpha$-olefin copolymer according to the present invention satisfies all of the following requirements (i) to (iv).

(i) A Vicat softening point is 85.0°C or lower.
(ii) When a melting torque at 160°C is X [N·m] and a melt flow rate is Y [g/10 min], a value of X + 6.5 $\times$ Ln (Y) is 23.0 or less.
(iii) When a differential molecular weight distribution curve is divided into three normal distribution curves, a ratio of a sum of peak heights of a middle molecular weight distribution component (component B) and a high molecular weight component (component C) to a peak height of a low molecular weight component (component A) is 10.00 or more.
(iv) A melt flow rate is 0.10 g/10 min or more and 10.00 g/10 min or less.

A method for manufacturing an ethylene-$\alpha$-olefin copolymer according to the present invention is a method for manufacturing an ethylene-$\alpha$-olefin copolymer having a density of 911 kg/m$^3$ or less by copolymerizing ethylene and an $\alpha$-olefin having 3 to 20 carbon atoms in the presence of an olefin polymerization catalyst, the method including adjusting polymerization conditions such that a value A defined by the following formula (1) is 67.0 or more and 100.0 or less.

[Mathematical formula 1]

$$A = \frac{\text{Number of short chain branches} + 2 \times (\text{Concentration of } \alpha\text{-olefin having 3 to 20 carbon atoms} + \text{Concentration of alkane})}{28} \times \text{Polymerization temperature} \Big/ \left(1 + 1\Big/\left(\frac{\text{Concentration of ethylene}}{\text{Concentration of gas other than hydrocarbon}}\right)^{\text{Polymerization temperature}}\right) \quad \ldots (1)$$

According to the present invention, it is possible to provide an ethylene-$\alpha$-olefin copolymer having relatively excellent acceptability of a filler contained as a flame retardant while maintaining appropriate extrusion processability.

DETAILED DESCRIPTION OF THE PREFERRED EMBODIMENTS

Hereinafter, an embodiment of the present invention will be described, but the present invention is not limited to the following embodiment.

<Ethylene-α-olefin copolymer>

An ethylene-α-olefin copolymer according to the present embodiment satisfies all of the following requirements (i) to (iv).

(i) A Vicat softening point is 85.0°C or lower.
(ii) When a melting torque at 160°C is X [N·m] and a melt flow rate is Y [g/10 min], a value of X + 6.5 × Ln (Y) is 23.0 or less.
(iii) When a differential molecular weight distribution curve is divided into three normal distribution curves, a ratio of a sum of peak heights of a middle molecular weight distribution component (component B) and a high molecular weight component (component C) to a peak height of a low molecular weight component (component A) is 10.00 or more.
(iv) A melt flow rate is 0.10 g/10 min or more and 10.00 g/10 min or less.

The ethylene-α-olefin copolymer according to the present embodiment is an ethylene-α-olefin copolymer obtained by copolymerizing ethylene and an α-olefin having 3 to 20 carbon atoms. Examples of the α-olefin having 3 to 20 carbon atoms include propylene, 1-butene, 1-pentene, 1-hexene, 1-heptene, 1-octene, 1-nonene, 1-decene, 1-dodecene, 4-methyl-1-pentene, and 4-methyl-1-hexene, and propylene, 1-butene, or 1-hexene is preferable. The α-olefin having 3 to 20 carbon atoms may be used singly or in combination of two or more types thereof.

In the ethylene-α-olefin copolymer according to the present embodiment, the α-olefin may contain at least one selected from propylene, butene, and hexene. Examples of such an ethylene-α-olefin copolymer include an ethylene-propylene copolymer, an ethylene-1-butene copolymer, an ethylene-1-hexene copolymer, an ethylene-propylene-1-butene copolymer, and an ethylene-1-butene-1-hexene copolymer, and an ethylene-1-butene copolymer, an ethylene-1-hexene copolymer, and an ethylene -1 butene-1-hexene copolymer are preferable.

The content of a monomer unit based on ethylene in the ethylene-α-olefin copolymer according to the present embodiment is usually 50 to 99% by mass with respect to the total mass (100% by mass) of the ethylene-α-olefin copolymer. The content of a monomer unit based on the α-olefin having 3 to 20 carbon atoms in the ethylene-α-olefin copolymer is usually 1 to 50% by mass with respect to the total mass (100% by mass) of the ethylene-α-olefin copolymer.

The ethylene-α-olefin copolymer according to the present embodiment has a Vicat softening point of 85.0°C or lower (requirement (i)). The Vicat softening point is preferably 80.0°C or lower from a viewpoint of improving filler acceptability.

The Vicat softening point of the ethylene-α-olefin copolymer according to the present embodiment is a Vicat softening point (unit: °C) measured by the following method.

[Method for measuring Vicat softening point (unit: °C)]

A sample of the ethylene-α-olefin copolymer is pressed by hot pressing to prepare a sheet having a thickness of about 5 mm. The obtained sheet is measured in accordance with Method A50 defined in JIS K7206-1999.

When a melting torque of the ethylene-α-olefin copolymer according to the present embodiment at 160°C is X [N·m] and a melt flow rate thereof is Y [g/10 min], a value of X + 6.5 × Ln (Y) is 23.0 or less (requirement (ii)). The value of X + 6.5 × Ln (Y) is preferably 21.0 or less from a viewpoint of improving extrusion processability.

The value of X + 6.5 × Ln (Y) of the ethylene-α-olefin copolymer according to the present embodiment is a value calculated from the melting torque X [unit: N·m] and the melt flow rate Y [unit: g/10 min] measured by the following methods. Note that Ln represents a natural logarithm.

[Method for measuring melting torque X [unit: N·m]]

The melting torque X is measured using a Labo Plastomill under the following conditions. Labo Plastomill 3S150 manufactured by Toyo Seiki Seisaku-sho, Ltd. is used as an apparatus. 38 g of a sample of the ethylene-α-olefin copolymer and 400 ppm of an antioxidant Sumilizer GP manufactured by Sumitomo Chemical Co., Ltd. are mixed, and the mixture is kneaded for 30 minutes under conditions of a set temperature of 160°C and a screw rotation speed of 60 rpm. Melting torque data during kneading is acquired at intervals of 0.125 seconds, and an average value for five minutes from a time point where 25 minutes have elapsed after start of kneading to an end of measurement is determined. The obtained average value is defined as the melting torque X.

[Method for measuring melt flow rate Y (g/10 min)

The melt flow rate Y is measured using a sample of the ethylene-α-olefin copolymer in accordance with Method A defined in JIS K7210-1995 under conditions of a temperature of 190°C and a load of 2.16 kg.

(iii) When a differential molecular weight distribution curve of the ethylene-α-olefin copolymer according to the present embodiment is divided into three normal distribution curves, a ratio of a sum of peak heights of a middle molecular weight distribution component (component B) and a high molecular weight component (component C) to a peak height of a low molecular weight component (component A) is 10.00 or more (requirement (iii)). The ratio is preferably 11.00 or more from a viewpoint of improving filler acceptability.

The ratio is a ratio of a sum of peak heights of a middle molecular weight distribution component (component B) and a high molecular weight component (component C) to a peak height of a low molecular weight component (component A), obtained by measuring a differential molecular weight curve (GPC) by the following method and performing peak division of the differential molecular weight curve (GPC).

(1) Differential molecular weight distribution curve (GPC)

The molecular weight of the sample of the ethylene-α-olefin copolymer is measured by a GPC method under the following conditions. Ortho-dichlorobenzene (0.1 w/V dibutylhydroxytoluene is added as an antioxidant) is used as a solvent, and a sample concentration is 1 mg/mL. As an apparatus, for example, HLC-8121GPC/HT manufactured by Tosoh Corporation is used. As a measurement column, for example, three GPC columns, TSKgel GMHHR-H(S)HT 7.5 mm, I.D. × 300 mm, manufactured by Tosoh Corporation are connected to each other and used. Ortho-dichlorobenzene (0.1 w/V dibutylhydroxytoluene is added as an antioxidant) is used as a mobile phase, a flow rate is set to 1 mL/min, a column oven temperature is set to 140°C, an autosampler temperature is set to 140°C, and a system oven temperature is set to 40°C. A differential refractive index detector (RID) is used as a detector, a RID cell temperature is 140°C, and an injection amount of the sample solution is 300 μL. The obtained measured value is multiplied by a Q factor value of 41.3 to obtain a molecular weight (M) in terms of polystyrene.

(2) Peak division of differential molecular weight distribution curve

The peak division of the differential molecular weight distribution curve can be performed using, for example, Python, and is specifically performed by the following method.

As a first step, an Anaconda version of a corresponding model is downloaded and installed, and an environment is set.

As a second step, a title of a first column of electronic data of the differential molecular weight distribution curve is set to "x", and a title of a second column is set to "y". Next, a logM value is input to a second row and after in the first column, dwt/d(logM) is input to a second row and after in the second column, and this data is stored as a csv file ('data name: csv').

In a third step, the following code is input and execution is performed using Jupyter Notebook (Anaconda 3).

```
# Read module
from scipy.optimize import curve_fit
import numpy as np
import matplotlib.pyplot as pit
import matplotlib.cm as cm
import pandas as pd

# Input data
dataset = pd.read _ csv('data name: csv')
x = dataset['x']
y = dataset['y']

# Define fitting function
def func(x, *params):

    # Determine number of functions to be fitted by
 length of params
    num_func = int(len(params)/3)
```

```
# Insert each parameter into Gaussian function to add
Gaussian function to y_list
y_list = []
for i in range(num_func):
y = np.zeros_like(x)
param_range = list(range(3*i,3*(i + 1),1))
amp = params[int(param_range[0])]
ctr = params[int(param_range[1])]
wid = params[int(param_range[2])]
y = y + amp * np.exp(-((x - ctr)/wid)**2)
y_list.append(y)

# Superimpose all Gaussian functions in y_list
y_sum = np.zeros_like(x)
for i in y_list:
y_sum = y_sum + i

# Add background
y_sum = y_sum + params[-1]
return y_sum

# Define Gaussian function used for fitting: y =
amp*exp[-((x - ctr)/wid)^2]
# amp = 1/(sqrt(2pi)*sig), ctr = m, wid = 2sig
def fit_plot(x, *params):
num_func = int(len(params)/3)
y_list = []
for i in range(num_func):
y = np.zeros_like(x)
param_range = list(range(3*i,3*(i+1),1))
amp = params[int(param_range[0])]
ctr = params[int(param_range[1])]
wid = params[int(param_range[2])]
y = y + amp * np.exp(-((x - ctr)/wid)**2) + params[-
1]
y_list.append(y)
return y_list

# Set initial value
# guess.appen([amp, ctr, wid]) -- > amp: height, ctr:
center value, wid: width
# When any of the following cases applies, initial
values of "Amp", "Center", and "Width" are changed, and
execution is performed until any of the following cases
does not apply.
# When runtime error is output
# When any one or more of Amp, Center, and Width is a
negative value
# When an absolute value of Baseline exceeds 3
guess = []
guess.append([initial value of "Amp",initial value of
"Center",initial value of "Width"]) # 1st curve
guess.append([initial value of "Amp",initial value of
"Center",initial value of "Width"]) # 2nd curve
guess.append([initial value of "Amp",initial value of
"Center",initial value of "Width"]) # 3rd curve

# Initial value of background
background = 0.1

# Couple initial value lists
guess_total = []
```

```
for i in guess:
guess_total.extend(i)
guess_total.append(background)

# Substitute Fitting optimized parameters into popt
popt, pcov = curve_fit(func, x, y, p0=guess_total)

# Plot experimental data and optimized data
fit = func(x, *popt)
plt.figure(figsize=(8,5))
plt.scatter(x, y, marker="o", s=50, c="blue")
plt.plot(x, fit , ls='-', c='red', lw=3)

# Plot each curve
y_list = fit_plot(x, *popt)
baseline = np.zeros_like(x) + popt[-1]
for n, i in enumerate(y_list):
plt.fill_between(x, i, baseline,
facecolor=cm.rainbow(n/len(y_list)), alpha=0.7)

# List parameters, Add Baseline to whole
data = {
"C1" : popt[0:3],
"C2" : popt[3:6],
"C3" : popt[6:9],
"Baseline" : popt[9:10],
}

# Display parameters in list format
idx = ["Amp","Center","Width"]
df = pd.DataFrame(data, index=idx)
df
```

[Peak height ratio [unit: none]]

The three peak center ("Center") values divided by the above method are defined as component A, component B, and component C from a smaller side, and a ratio of a sum of peak heights of component B and component C to a peak height of component A ("Amp") is determined.

A melt flow rate of the ethylene-$\alpha$-olefin copolymer according to the present embodiment is 0.10 g/10 min or more and 10.00 g/10 min or less (requirement (iv)). The melt flow rate is preferably 0.20 g/10 min or more and 10.00 g/10 min or less from a viewpoint of improving extrusion processability.

The melt flow rate of the ethylene-$\alpha$-olefin copolymer according to the present embodiment is a value obtained by performing measurement under conditions of a temperature of 190°C and a load of 2.16 kg in accordance with Method A defined in JIS K7210-1995 using a sample of the ethylene-$\alpha$-olefin copolymer.

The ethylene-$\alpha$-olefin copolymer according to the present embodiment preferably has a long chain branch. Examples of the ethylene-$\alpha$-olefin copolymer include those having high flow activation energy (Ea) of usually 40 kJ/mol or more. The flow activation energy (Ea) is preferably 45 kJ/mol or more, more preferably 50 kJ/mol or more, and still more preferably 60 kJ/mol or more from a viewpoint of improving an appearance of an extruded product. In addition, the flow activation energy (Ea) is preferably 100 kJ/mol or less, and more preferably 90 kJ/mol or less from a viewpoint of enhancing mechanical strength of an extruded product.

The flow activation energy (Ea) of the ethylene-$\alpha$-olefin copolymer is a numerical value calculated by an Arrhenius equation from a shift factor (aT) at the time of creating a master curve indicating angular frequency (unit: rad/sec) dependency of a melt complex viscosity (unit: Pa·sec) at 190°C on a basis of a temperature-time superimposing principle, and is a value obtained by the following method. That is, for four temperatures including 190°C selected from temperatures of 130°C, 150°C, 170°C, 190°C, and 210°C, a shift factor (aT) at each of the temperatures (T, unit: °C) obtained when a melt complex viscosity-angular frequency curve (unit of the melt complex viscosity: Pa-sec, unit of the angular frequency: rad/sec) of the ethylene-$\alpha$-olefin copolymer at each of the temperatures (T) is superimposed on a melt complex viscosity-angular frequency curve of the ethylene-based copolymer at 190°C is determined for each melt complex viscosity-angular frequency curve at each of the temperatures (T) on the basis of a temperature-time superimposing principle, and from each of the temperatures (T) and the shift factor (aT) at each of the temperatures (T), a first-order approximate formula (the following formula (I)) between [Ln (aT)] and [1/(T + 273.16)] is calculated by a least squares method. Next, Ea is determined from an inclination m of the primary formula and the following formula (II).

$$Ln(aT) = m(1/(T + 273.16))+n \qquad (I)$$

$$Ea = |0.008314 \times m| \qquad (II)$$

In the formulas (I) and (II), aT, Ea, and T represent the following.

aT: shift factor
Ea: flow activation energy (unit: kJ/mol)
T: temperature (unit: °C)

The calculation may use commercially available calculation software. Examples of the calculation software include Rhios V.4.4.4 manufactured by Rheometrics. Note that the shift factor (aT) is a shift amount when a double logarithmic curve of the melt complex viscosity-angular frequency at each of the temperatures (T) is shifted in a log (Y) = -log (X) axis direction (Note that the Y axis represents a melt complex viscosity, and the X axis represents an angular frequency.) and superimposed on the melt complex viscosity-angular frequency curve at 190°C. In the superimposition, the double logarithmic curve of the melt complex viscosity-angular frequency at each of the temperatures (T) shifts the angular frequency so as to be aT times and moves the melt complex viscosity so as to be 1/aT times. In addition, a correlation coefficient when the first-order approximate formula (I) obtained from the shift factors at the four temperatures including 190°C selected from temperatures of 130°C, 150°C, 170°C, 190°C, and 210°C and the temperatures is determined by a least square method is usually 0.99 or more.

The melt complex viscosity-angular frequency curve is usually measured using a viscoelasticity measuring apparatus (for example, Rheometrics Mechanical Spectrometer RMS-800 manufactured by Rheometrics) under conditions of geometry: parallel plate, plate diameter: 25 mm, plate interval: 1.5 to 2 mm, strain: 5%, and angular frequency: 0.1 to 100 rad/sec. Note that the measurement is performed in a nitrogen atmosphere, and an appropriate amount (for example, 1000 ppm) of an antioxidant is preferably blended in a measurement sample in advance.

A melt flow rate ratio (MFRR) of the ethylene-α-olefin copolymer according to the present embodiment is usually 40 to 300. The MFRR is preferably 50 or more, and more preferably 60 or more from a viewpoint of further improving an appearance of an extruded product. In addition, the MFRR is preferably 250 or less, and more preferably 200 or less from a viewpoint of increasing mechanical strength of an extruded product. Note that the MFRR is a value obtained by dividing a melt flow rate (MFR-H, unit: g/10 min) measured under conditions of a load of 21.6 kg and a measurement temperature of 190°C in accordance with Method A defined in JIS K7210-1995 by a melt flow rate (MFR) measured under conditions of a load of 2.16 kg and a temperature of 190°C in accordance with Method A defined in JIS K7210-1995.

The ethylene-α-olefin copolymer according to the present embodiment usually has a density of 870 to 960 kg/m$^3$. The density is preferably 940 kg/m$^3$ or less, more preferably 930 kg/m$^3$ or less, still more preferably 925 kg/m$^3$ or less, and particularly preferably 920 kg/m$^3$ or less from a viewpoint of increasing mechanical strength of an extruded product. In addition, the density is preferably 880 kg/m$^3$ or more, and more preferably 890 kg/m$^3$ or more from a viewpoint of enhancing heat resistance of an extruded product. Note that the density is measured in accordance with the method defined in JIS K7112-1980.

<Method for manufacturing ethylene-α-olefin copolymer>

A method for manufacturing the ethylene-α-olefin copolymer according to the present embodiment is a method for manufacturing an ethylene-α-olefin copolymer having a density of 911 kg/m$^3$ or less by copolymerizing ethylene and an α-olefin having 3 to 20 carbon atoms in the presence of an olefin polymerization catalyst, the method including adjusting polymerization conditions such that a value A defined by the following formula (1) is 67.0 or more and 100.0 or less.
[Mathematical formula 2]

$$A = \frac{\dfrac{\text{Number of short chain branches} + 2 \times (\text{Concentration of } \alpha\text{-olefin having 3 to 20 carbon atoms} + \text{Concentration of alkane})}{28}}{/\left(1 + 1/\left(\dfrac{\text{Concentration of ethylene}}{\text{Concentration of gas other than hydrocarbon}}\right)^{\wedge}\text{Polymerization temperature}\right)} \times \text{Polymerization temperature} \quad \cdots \quad (1)$$

In recent years, as the density of an ethylene-$\alpha$-olefin copolymer is reduced, when the ethylene-$\alpha$-olefin copolymer is manufactured, poor fluidity of a polymer in a polymerization tank occurs, and as a result, there is a problem that a stable operation cannot be performed. Therefore, it is required to achieve both suppression of generation of a lump due to adhesion, melting, or the like of polymer particles, which may cause the poor fluidity, and suppression of entrainment of polymer particles from a top of a polymerization tank from a viewpoint of improving a catalyst basic unit. In the method for manufacturing the ethylene-$\alpha$-olefin copolymer according to the present embodiment, even when the density of the ethylene-$\alpha$-olefin copolymer is as low as 911 kg/m$^3$ or less, by adjusting polymerization conditions such that the value A defined by the formula (1) is 67.0 or more and 100.0 or less, it is possible to suppress entrainment of polymer particles and to suppress generation of a lump due to adhesion, melting, or the like of polymer particles, thus making poor fluidity relatively less likely to occur.

The value A defined by the formula (1) is preferably 75.0 or more and 98.0 or less. The value A defined by the formula (1) can be adjusted to a predetermined range by adjusting the concentration of an $\alpha$-olefin having 3 to 20 carbon atoms, the concentration of an alkane, the concentration of ethylene, and the concentration of a gas other than a hydrocarbon in a polymerization reaction gas, and a polymerization temperature.

The density of the ethylene-$\alpha$-olefin copolymer may be, for example, 889 kg/m$^3$ or more and 911 kg/m$^3$ or less.

In the formula (1), the number of short chain branches of the ethylene-$\alpha$-olefin copolymer is preferably 21.0 or more, and more preferably 25.0 or more per 1000 carbon atoms from a viewpoint of making poor fluidity relatively less likely to occur. The number of short chain branches of the ethylene-$\alpha$-olefin copolymer may be, for example, 33.0 or less.

[Method for measuring number of short chain branches]

The number of short chain branches of the ethylene-$\alpha$-olefin copolymer can be measured by the following method.

<$^{13}$C-NMR measurement of standard product>

A carbon nuclear magnetic resonance ($^{13}$C-NMR) spectrum of a standard product is measured under the following measurement conditions.

(Measurement conditions)

Apparatus: AVANCE 600 manufactured by Bruker Corporation
Measurement probe: 10 mm cryoprobe
Measurement solvent: 1,2-dichlorobenzene-d4
Measurement temperature: 135°C
Measurement method: proton decoupling method
Pulse width: 45 degrees
Pulse repeating time: four seconds
Window function: negative exponential function and Gaussian function
Number of integrations: 5000

<Number of short chain branches of standard product>

In the obtained spectrum of carbon nuclear magnetic resonance ($^{13}$C-NMR), analysis processing is performed by an exponential function, and when a sum of peak areas of all peaks having a peak top at 5 to 50 ppm is 1000, a peak area derived from a methine carbon atom to which a branch having 2 carbon atoms is bonded is calculated as a short chain branch amount.

<Infrared spectrometry>

For example, as described in "Polymer Analysis Handbook, New Edition, First edition, page 590, edited by The Japan Society for Analytical Chemistry", it is known that a peak of a short chain branch of an ethylene-$\alpha$-olefin copolymer is observed at 1378 cm$^{-1}$ in an infrared spectroscopic spectrum. The ethylene-$\alpha$-olefin copolymer is heated at 6 MPa for five minutes using a hot press preheated at 150°C for five minutes, and then cooled in a water-cooled die for five minutes to be molded into a thickness of 0.01 cm. The thickness after molding is measured with a thickness meter. An infrared spectroscopic spectrum of the molded ethylene-$\alpha$-olefin copolymer is measured under the following measurement conditions. An infrared spectroscopic spectrum of the standard product for which $^{13}$C-NMR has been measured is also measured in the same procedure.

(Measurement conditions)

Apparatus: FTIR 470 plus manufactured by JASCO Corporation
Detector: TGS
Number of scans: 16 times
Resolution: 2 cm$^{-1}$
Vertical axis: absorbance

<Number of short chain branches>

In the obtained infrared spectroscopic spectrum, a point at 955 cm$^{-1}$ and a point at 1790 cm$^{-1}$ are connected to each other by a straight line to form a baseline. The number B of short chain branches is calculated by formula (i) .

$$B = Bs \times F/Fs \quad \text{Formula (i)}$$

Here, Bs is the number of short chain branches determined by $^{13}$C-NMR of the standard product, F is determined by formula (ii), and Fs is determined by formula (iii) .

$$F = (A1/(\rho \times t) -0.95A2/(\rho \times t) + 3.8) \quad \text{Formula (ii)}$$

$$Fs = (A1s/(\rho s \times ts) -0.95A2/(\rho s \times ts) + 3.8) \quad \text{Formula (iii)}$$

Here, A1 is the height of a peak at 1378 cm$^{-1}$ from the baseline in the infrared spectroscopic spectrum of the ethylene-$\alpha$-olefin copolymer, $\rho$ is the density of the ethylene-$\alpha$-olefin copolymer (g/cm$^3$), t is the measured thickness of the ethylene-$\alpha$-olefin copolymer (cm), A2 is a maximum value of the heights in a range of 1281 to 1324 cm$^{-1}$ in an infrared spectroscopic spectrum of the ethylene-$\alpha$-olefin copolymer after subtraction of the baseline, A1s is the height of a peak at 1378 cm$^{-1}$ from the baseline in the infrared spectroscopic spectrum of the standard product, $\rho s$ is the density of the standard product (g/cm$^3$), ts is the measured thickness of the standard product (cm), and A2s is a maximum value of the heights in a range of 1281 to 1324 cm$^{-1}$ in an infrared spectroscopic spectrum of the standard product after subtraction of the baseline.

Examples of the method for manufacturing the ethylene-$\alpha$-olefin copolymer according to the present embodiment include a method in which ethylene and an $\alpha$-olefin are copolymerized in the presence of an olefin polymerization catalyst obtained by using, as catalyst components, a solid particulate co-catalyst component (hereinafter, also referred to as "component (i)") obtained by causing a co-catalyst component such as an organoaluminum compound, an organoaluminumoxy compound, a boron compound, or an organozinc compound to be carried on a particulate carrier, and a metallocene complex (hereinafter, also referred to as "component (ii)") having a ligand having a structure in which two cyclopentadienyl type anion skeletons are bonded to each other by a crosslinking group such as an alkylene group or a silylene group. As one aspect, the olefin polymerization catalyst is a polymerization catalyst obtained by using, as catalyst components, a solid particulate co-catalyst component obtained by causing at least one co-catalyst component selected from an organoaluminum compound, an organoaluminumoxy compound, a boron compound, and an organozinc compound to be carried on a particulate carrier, and a metallocene complex having a ligand having a structure in which two cyclopentadienyl type anion skeletons are bonded to each other by at least one crosslinking group selected from an alkylene group and a silylene group.

Examples of the solid particulate co-catalyst component include a component obtained by mixing methylalumoxane with porous silica, and a component obtained by mixing diethyl zinc, water, and fluorinated phenol with porous silica.

Specific examples of the solid particulate co-catalyst component include the co-catalyst component (i) obtained by bringing diethyl zinc as component (a), fluorinated phenol as component (b), water as component (c), porous silica as component (d), and trimethyldisilazane ($((CH_3)_3Si)_2NH$) as component (e) into contact with each other.

Examples of the fluorinated phenol as component (b) include pentafluorophenol, 3,5-difluorophenol, 3,4,5-trifluorophenol, and 2,4,6-trifluorophenol. As the fluorinated phenol, two types of fluorinated phenols having different numbers of fluorine atoms are preferably used from a viewpoint of increasing the flow activation energy (Ea) and the molecular weight distribution (Mw/Mn) of the ethylene-$\alpha$-olefin copolymer according to the present embodiment. In this case, a molar ratio between a phenol having a large number of fluorine atoms and a phenol having a small number of fluorine atoms is usually 20/80 to 80/20. The molar ratio is preferably 30/70 to 70/30.

As the use amounts of the component (a), the component (b), and the component (c), when a molar ratio of use amount among the components is represented by component (a): component (b): component (c) = 1: y: z, y and z preferably satisfy the following formula.

$$|2-y-2z| \leq 1$$

y in the above formula is preferably a number of 0.01 to 1.99, more preferably a number of 0.10 to 1.80, still more preferably a number of 0.20 to 1.50, and particularly preferably a number of 0.30 to 1.00.

The amount of component (d) used with respect to component (a) is such an amount that the number of moles of zinc atoms contained in particles obtained by contact between component (a) and component (d) is preferably 0.1 mmol or more, and more preferably 0.5 to 20 mmol per g of the particles. The amount of component (e) used with respect to component (d) is preferably such an amount that the number of moles of component (e) is 0.1 mmol or more, and more preferably 0.5 to 20 mmol per g of component (d).

Examples of the metallocene complex include: a zirconocene complex in which two indenyl groups are bonded to each other by an ethylene group, a dimethylmethylene group, or a dimethylsilylene group; a zirconocene complex in which two methylindenyl groups are bonded to each other by an ethylene group, a dimethylmethylene group, or a dimethylsilylene group; a zirconocene complex in which two methylcyclopentadienyl groups are bonded to each other by an ethylene group, a dimethylmethylene group, or a dimethylsilylene group; and a zirconocene complex in which two dimethylcyclopentadienyl groups are bonded to each other by an ethylene group, a dimethylmethylene group, or a dimethylsilylene group. Examples of a metal atom of component (ii) include zirconium and hafnium, and examples of the remaining substituent of the metal atom include a diphenoxy group and a dialkoxy group. Component (ii) is preferably ethylenebis(1-indenyl) zirconium diphenoxide.

In the polymerization catalyst obtained by using the solid particulate co-catalyst component and the metallocene complex, an organoaluminum compound may be appropriately used in combination as a catalyst component, and examples of the organoaluminum compound include triisobutylaluminum and trinormaloctylaluminum.

The use amount of the metallocene complex is preferably $5 \times 10^{-6}$ to $5 \times 10^{-4}$ mol per g of the solid particulate co-catalyst component. The use amount of the organoaluminum compound is preferably such an amount that the number of moles of aluminum atoms of the organoaluminum compound is 1 to 2000 mol per mol of metal atoms of the metallocene complex.

In the polymerization catalyst using the solid particulate co-catalyst component and the metallocene complex, an electron-donating compound may be appropriately used in combination as a catalyst component. Examples of the electron-donating compound include triethylamine and trinormal octylamine.

When two types of fluorinated phenols having different numbers of fluorine atoms are used as the fluorinated phenol as component (b), an electron-donating compound is preferably used.

The use amount of the electron-donating compound is usually 0.1 to 10 mol% with respect to the number of moles of aluminum atoms of the organoaluminum compound used as the catalyst component. The use amount is preferably 0.2 to 5 mol% with respect to the number of moles of aluminum atoms of the organoaluminum compound used as the catalyst component from a viewpoint of increasing the molecular weight distribution (Mw/Mn) of the ethylene-$\alpha$-olefin copolymer according to the present embodiment.

More specific examples of the method for manufacturing the ethylene-$\alpha$-olefin copolymer according to the present embodiment include a method in which ethylene and an $\alpha$-olefin having 3 to 20 carbon atoms are copolymerized in the presence of a catalyst obtained by bringing the co-catalyst component (i), a crosslinked bisindenyl zirconium complex, and an organoaluminum compound into contact with each other.

Examples of a polymerization method include a continuous polymerization method including molding of particles of an ethylene-α-olefin copolymer. Examples of the continuous polymerization method include continuous gas phase polymerization, continuous slurry polymerization, and continuous bulk polymerization, and continuous gas phase polymerization is preferable. A gas phase polymerization reaction apparatus is usually an apparatus including a fluidized bed type reaction tank, and preferably an apparatus including a fluidized bed type reaction tank having an enlarged portion. In the apparatus including a fluidized bed type reaction tank, a stirring blade may be disposed in the reaction tank.

As a method for supplying the components of the polymerization catalyst used for manufacturing the ethylene-α-olefin copolymer according to the present embodiment to the reaction tank, usually, a method for supplying the components in a water-free state using an inert gas such as nitrogen or argon, hydrogen, ethylene, or the like, or a method for supplying the components in a solution or slurry state by dissolving or diluting the components in a solvent is used. The components of the polymerization catalyst may be supplied individually, or any components may be brought into contact with each other in advance in any order and supplied.

Prepolymerization may be performed before main polymerization is performed. A prepolymerized prepolymerization catalyst component is preferably used as a catalyst component or a catalyst in main polymerization. An α-olefin used in the main polymerization may be different from that used in the prepolymerization. The α-olefin prepolymerized with ethylene is preferably an α-olefin having 4 to 12 carbon atoms, and more preferably an α-olefin having 6 to 8 carbon atoms.

In the formula (1), a polymerization temperature is usually lower than a temperature at which the ethylene-α-olefin copolymer is melted, preferably 0°C or higher and 150°C or lower, more preferably 30°C or higher and 100°C or lower, still more preferably 50°C or higher and 90°C or lower, and particularly preferably 66°C or higher and 84°C or lower. The polymerization temperature is preferably 60°C or higher and 85°C or lower from a viewpoint of widening the molecular weight distribution (Mw/Mn) of the ethylene-α-olefin copolymer.

Polymerization time (as average residence time in a case of a continuous polymerization reaction) is usually 1 to 20 hours. The polymerization time (average residence time) is preferably 2 to 10 hours from a viewpoint of widening the molecular weight distribution (Mw/Mn) of the ethylene-α-olefin copolymer.

In the formula (1), the concentration of an α-olefin having 3 to 20 carbon atoms in a polymerization reaction gas is preferably 1.0 mol% or more and 2.5 mol% or less, and more preferably 1.3 mol% or more and 2.1 mol% or less. The concentration of an alkane is preferably 0.1 mol% or more and 5.0 mol% or less, and more preferably 0.3 mol% or more and 3.0 mol% or less. The concentration of ethylene is preferably 65.0 mol% or more and 95.0 mol% or less, and more preferably 70.0 mol% or more and 90.0 mol% or less.

When the ethylene-α-olefin copolymer is manufactured, hydrogen may be added to a polymerization reaction gas as a molecular weight regulator, and an inert gas (for example, nitrogen) may coexist in the polymerization reaction gas from a viewpoint of making poor fluidity of a polymer in the polymerization tank less likely to occur. As one aspect, when hydrogen and nitrogen are contained in the polymerization reaction gas, in the formula (1), the concentration of a gas other than a hydrocarbon in the polymerization reaction gas is a sum of the concentration of hydrogen and the concentration of nitrogen. In this aspect, the concentration of nitrogen is 5.0 mol% or more and 30.0 mol% or less, and preferably 10.0 mol% or more and 25.0 mol% or less. In this aspect, the concentration of hydrogen is preferably 0.3 mol% or more and 2.5 mol% or less, and more preferably 0.5 mol% or more and 1.5 mol% or less.

The molar concentration of hydrogen in the polymerization reaction gas with respect to the molar concentration of ethylene in the polymerization reaction gas is usually 0.1 mol% or more and 3 mol% or less with respect to 100 mol% of the molar concentration of ethylene in the polymerization reaction gas. In addition, the molar concentration of hydrogen in the polymerization reaction gas is preferably 0.2 mol% or more and 2.5 mol% or less with respect to 100 mol% of the molar concentration of ethylene in the polymerization reaction gas from a viewpoint of widening the molecular weight distribution (Mw/Mn) of the ethylene-α-olefin copolymer.

The ethylene-α-olefin copolymer according to the present embodiment may contain an additive as necessary. Hereinafter, the ethylene-α-olefin copolymer containing an additive is referred to as a polyethylene resin composition. The polyethylene resin composition contains the ethylene-α-olefin copolymer according to the present embodiment in an amount of preferably 5% by mass or more and 95% by mass or less, more preferably 10% by mass or more and 90% by mass or less, still more preferably 15% by mass or more and 85% by mass or less with respect to 100% by mass of the total amount of the polyethylene resin composition.

Examples of the additive include an organic peroxide, a hindered amine-based light stabilizer, a crosslinking aid, an ultraviolet absorber, and a silane coupling agent.

(1) Organic peroxide

An organic peroxide can be blended in the polyethylene resin composition. The organic peroxide is mainly used for crosslinking a polyethylene resin. As the organic peroxide, an organic peroxide having a decomposition temperature (temperature at which a half-life is one hour) of 70 to 180°C, particularly 90 to 160°C can be used. Examples of such an organic peroxide include t-butylperoxyisopropyl carbonate, t-butylperoxy-2-ethylhexyl carbonate, t-butylperoxyacetate, t-butylperoxybenzoate, dicumyl peroxide, 2,5-dimethyl-2,5-di(t-butylperoxy) hexane, di-t-butyl peroxide, 2,5-dimethyl-2,5-di(t-butylperoxy) hexyne-3,1,1-di(t-butylperoxy)-3,3,5-trimethylcyclohexane, 1,1-di(t-butylperoxy) cyclohexane, methylethylketone peroxide, 2,5-dimethylhexyl-2,5-diperoxybenzoate, t-butylhydroperoxide, p-menthane hydroperoxide, benzoyl peroxide, p-chlorobenzoyl peroxide, t-butyl peroxyisobutyrate, hydroxyheptyl peroxide, and diclohexanone peroxide.

A blending ratio of the organic peroxide is preferably 0.2 to 5 parts by mass, more preferably 0.5 to 3 parts by mass, and still more preferably 1 to 2 parts by mass with respect to 100 parts by mass of the ethylene-$\alpha$-olefin copolymer according to the present embodiment. When the blending ratio of the organic peroxide is within the above range, a polyethylene resin is sufficiently and uniformly crosslinked.

(2) Hindered amine-based light stabilizer

A hindered amine-based light stabilizer can be blended in the polyethylene resin composition. The hindered amine-based light stabilizer traps a radical species harmful to a polymer and prevents generation of a new radical. There are many types of hindered amine-based light stabilizers from a low-molecular-weight compound to a high-molecular-weight compound, but a conventionally known hindered amine-based light stabilizer can be used without particular limitation.

Examples of the low-molecular-weight hindered amine-based light stabilizer include: a mixture of 70% by mass of a reaction product (molecular weight: 737) of a decanedioic acid bis(2,2,6,6-tetramethyl-1(octyloxy)-4-piperidinyl) ester, 1,1-dimethylethyl hydroperoxide, and octane and 30% by mass of polypropylene; bis(1,2,2,6,6-pentamethyl-4-piperidyl) [[3,5-bis(1,1-dimethylethyl)-4-hydroxyphenyl] methyl] butyl malonate (molecular weight: 685); a mixture of bis(1,2,2,6,6-pentamethyl-4-piperidyl) sebacate and methyl -1,2,2,6,6-pentamethyl-4-piperidyl sebacate (molecular weight: 509); bis(2,2,6,6-tetramethyl-4-piperidyl) sebacate (molecular weight: 481); tetrakis(2,2,6,6-tetramethyl-4-piperidyl)-1,2,3,4-butanetetracarboxylate (molecular weight: 791); tetrakis(1,2,2,6,6-pentamethyl-4-piperidyl)-1,2,3,4-butanetetracarboxylate (molecular weight: 847); a mixture of 2,2,6,6-tetramethyl-4-piperidyl-1,2,3,4-butanetetracarboxylate and tridecyl-1,2,3,4-butanetetracarboxylate (molecular weight: 900); and a mixture (molecular weight: 900) of 1,2,2,6,6-pentamethyl-4-piperidyl-1,2,3,4-butanetetracarboxylate and tridecyl-1,2,3,4-butanetetracarboxylate.

Examples of the high-molecular-weight hindered amine-based light stabilizer include: poly[{6-(1,1,3,3-tetramethylbutyl) amino-1,3,5-triazine-2,4-diyl}{(2,2,6,6-tetramethyl-4-piperidyl) imino} hexamethylene {(2,2,6,6-tetramethyl-4-piperidyl) imino}] (molecular weight: 2,000 to 3,100); a polymer of dimethyl succinate and 4-hydroxy-2,2,6,6-tetramethyl-1-piperidine ethanol (molecular weight: 3,100 to 4,000); a mixture of N,N',N",N"'-tetrakis-4,6-bis-(butyl-(N-methyl-2,2,6,6-tetramethylpiperidin-4-yl) amino)-triazin-2-yl)-4,7-diazadecane-1,10-diamine (molecular weight: 2,286) and a polymer of the dimethyl succinate and 4-hydroxy-2,2,6,6-tetramethyl-1-piperidineethanol; a polycondensate of dibutylamine-1,3,5-triazine-N,N'-bis(2,2,6,6-tetramethyl-4-piperidyl-1,6-hexamethylenediamine and N-(2,2,6,6-tetramethyl-4-piperidyl) butylamine (molecular weight 2,600 to 3,400); and a copolymer of ethylene and a cyclic aminovinyl compound such as 4-acryloyloxy-2,2,6,6-tetramethylpiperidine, 4-acryloyloxy-1,2,2,6,6-pentamethylpiperidine, 4-acryloyloxy-1-ethyl-2,2,6,6-tetramethylpiperidine, 4-acryloyloxy-1-propyl-2,2,6,6-tetramethylpiperidine, 4-acryloyloxy-1-butyl-2,2,6,6-tetramethylpiperidine, 4-methacryloyloxy-2,2,6,6-tetramethylpiperidine, 4-methacryloyloxy 1,2,2,6,6-pentamethylperidine, 4-methacryloyloxy-1-ethyl-2,2,6,6-tetramethylpiperidine, 4-methacryloyloxy-1-butyl-2,2,6,6-tetramethylpiperidine, 4-crotonoyloxy-2,2,6,6-tetramethylpiperidine, or 4-crotonoyloxy-1-propyl-2,2,6,6-tetramethylpiperidine. The hindered amine-based light stabilizer may be used singly or in combination of two or more types thereof.

Among these compounds, as the hindered amine-based light stabilizer, poly[{6-(1,1,3,3-tetramethylbutyl) amino-1,3,5-triazine-2,4-diyl}{(2,2,6,6-tetramethyl-4-piperidyl) imino} hexamethylene {(2,2,6,6-tetramethyl-4-piperidyl) imino}] (molecular weight: 2,000 to 3,100), a polymer of dimethyl succinate and 4-hydroxy-2,2,6,6-tetramethyl-1-piperidine ethanol (molecular weight: 3,100 to 4,000), a mixture of N,N',N",N"'-tetrakis-4,6-bis-(butyl-(N-methyl-2,2,6,6-tetramethylpiperidin-4-yl) amino)-triazin-2-yl)-4,7-diazadecane-1,10-diamine (molecular weight: 2,286) and a polymer of the dimethyl succinate and 4-hydroxy-2,2,6,6-tetramethyl-1-piperidineethanol, a polycondensate of dibutylamine-1,3,5-triazine-N,N'-bis(2,2,6,6-tetramethyl-4-piperidyl-1,6-hexamethylenediamine and N-(2,2,6,6-tetramethyl-4-piperidyl) butylamine (molecular weight 2,600 to 3,400), and a copolymer of a cyclic aminovinyl compound and ethylene are preferably used. This is because these compounds prevent bleed-out of the hindered amine-based light stabilizer with time during use of a product. The hindered amine-based light stabilizer preferably has a melting point of 60°C or higher from a viewpoint of easily preparing the polyethylene resin composition.

In the polyethylene resin composition, the content of the hindered amine-based light stabilizer is preferably 0.01 to 2.5 parts by mass, more preferably 0.01 to 1.0 parts by mass, still more preferably 0.01 to 0.5 parts by mass, particularly preferably 0.01 to 0.2 parts by mass, and most preferably 0.03 to 0.1 parts by mass with respect to 100 parts by mass of the ethylene-$\alpha$-olefin copolymer.

By setting the content of the hindered amine-based light stabilizer to 0.01 parts by mass or more, a stabilization effect can be sufficiently obtained, and by setting the content to 2.5 parts by mass or less, discoloration of a resin due to excessive addition of the hindered amine-based light stabilizer can be suppressed. In the polyethylene resin composition, a mass ratio between the organic peroxide and the hindered amine-based light stabilizer is preferably 1 : 0.01 to 1 : 10, and more preferably 1 : 0.02 to 1 : 6.5. This makes it possible to remarkably suppress yellowing of a resin.

(3) Crosslinking aid

A crosslinking aid can be blended in the polyethylene resin composition. The crosslinking aid is effective for accelerating a crosslinking reaction and increasing the degree of crosslinking of the ethylene-α-olefin copolymer. Specific examples of the crosslinking aid include a polyunsaturated compound such as a polyallyl compound or a poly(meth)acryloxy compound. More specific examples of the crosslinking aid include: a polyallyl compound such as triallyl isocyanurate, triallyl cyanurate, diallyl phthalate, diallyl fumarate, or diallyl maleate; a poly(meth)acryloxy compound such as ethylene glycol diacrylate, ethylene glycol dimethacrylate, or trimethylolpropane trimethacrylate; and divinylbenzene. The crosslinking aid can be blended at a ratio of about 0 to 5 parts by mass with respect to 100 parts by mass of the ethylene-α-olefin copolymer according to the present embodiment.

(4) Ultraviolet absorber

An ultraviolet absorber can be blended in the polyethylene resin composition. Examples of the ultraviolet absorber include various types of ultraviolet absorber such as a benzophenone-based ultraviolet absorber, a benzotriazole-based ultraviolet absorber, a triazine-based ultraviolet absorber, and a salicylic acid ester-based ultraviolet absorber.
Examples of the benzophenone-based ultraviolet absorber include 2-hydroxy-4-methoxybenzophenone, 2-hydroxy-4-methoxy-2'-carboxybenzophenone, 2-hydroxy-4-n-octoxybenzophenone, 2-hydroxy-4-n-dodecyloxybenzophenone, 2-hydroxy-4-n-octadecyloxybenzophenone, 2-hydroxy-4-benzyloxybenzophenone, 2-hydroxy-4-methoxy-5-sulfobenzophenone, 2-hydroxy-5-chlorobenzophenone, 2,4-dihydroxybenzophenone, 2,2'-dihydroxy-4-methoxybenzophenone, 2,2'-dihydroxy-4,4'-dimethoxybenzophenone, and 2,2',4,4'-tetrahydroxybenzophenone.
Examples of the benzotriazole-based ultraviolet absorber include a hydroxyphenyl-substituted benzotriazole compound such as 2-(2-hydroxy-5-methylphenyl) benzotriazole, 2-(2-hydroxy-5-t-butylphenyl) benzotriazole, 2-(2-hydroxy-3,5-dimethylphenyl) benzotriazole, 2-(2-methyl-4-hydroxyphenyl) benzotriazole, 2-(2-hydroxy-3-methyl-5-t-butylphenyl) benzotriazole, 2-(2-hydroxy-3,5-dit-amylphenyl) benzotriazole, or 2-(2-hydroxy-3,5-di-t-butylphenyl) benzotriazole. Examples of the triazine-based ultraviolet absorber include 2-[4,6-bis(2,4-dimethylphenyl)-1,3,5-triazin-2-yl]-5-(octyloxy) phenol and 2-(4,6-diphenyl-1,3,5-triazin-2-yl)-5-(hexyloxy) phenol. Examples of the salicylic acid ester-based ultraviolet absorber include phenyl salicylate and p-octylphenyl salicylate. The content of the ultraviolet absorber is preferably 2.0 parts by mass or less, more preferably 0.05 to 2.0 parts by mass, still more preferably 0.1 to 1.0 parts by mass, particularly preferably 0.1 to 0.5 parts by mass, and most preferably 0.2 to 0.4 parts by mass with respect to 100 parts by mass of the ethylene-α-olefin copolymer.

(5) Silane coupling agent

In the polyethylene resin composition, a silane coupling agent can be used for the purpose of modifying a resin. Examples of the silane coupling agent used in the polyethylene resin composition include γ-chloropropyltrimethoxysilane, vinyltrichlorosilane; vinyltriethoxysilane, vinyltrimethoxysilane; vinyl-tris-(β-methoxyethoxy) silane, γ-methacryloxypropyltrimethoxysilane, β-(3,4-epoxycyclohexyl) ethyltrimethoxysilane, γ-glycidoxypropyltrimethoxysilane, vinyltriacetoxysilane, γ-mercaptopropyltrimethoxysilane, γ-aminopropyltrimethoxysilane, N-β-(aminoethyl)-γ-aminopropyltrimethoxysilane, and 3-acryloxypropyltrimethoxysilane. The silane coupling agent is preferably vinyltrimethoxysilane, γ-methacryloxypropyltrimethoxysilane, or 3-acryloxypropyltrimethoxysilane. The silane coupling agent is used preferably in an amount of 0 to 5 parts by mass, more preferably in an amount of 0.01 to 4 parts by mass, still more preferably in an amount of 0.01 to 2 parts by mass, particularly preferably in an amount of 0.05 to 1 parts by mass with respect to 100 parts by mass of the ethylene-α-olefin copolymer.

(6) Other additive component

Another additional optional component can be blended in the polyethylene resin composition as long as the object of the present invention is not significantly impaired. Examples of such an optional component include an antioxidant, a crystal nucleating agent, a transparentizing agent, a lubricant, a colorant, a dispersant, a filler, a fluorescent whitening agent, an ultraviolet absorber, and a light stabilizer which are usually used for a usual polyolefin-based resin material.

In order to impart flexibility and the like, 3 to 75 parts by mass of a lubricating oil, a crystalline ethylene-$\alpha$-olefin copolymer polymerized by a Ziegler-based or metallocene-based catalyst, and/or a rubber-based compound such as an ethylene-$\alpha$-olefin elastomer such as EBR or EPR, or a styrene-based elastomer such as SEBS or a hydrogenated styrene block copolymer can be blended in the polyethylene resin composition as long as the object of the present invention is not impaired. Furthermore, in order to impart a melt tension or the like, 3 to 75 parts by mass of high pressure method low density polyethylene can be blended.

Examples of a method for blending another additional optional component into the polyethylene resin composition include a known melt-kneading method. Examples of the method include a method in which dry blending is performed using a tumbler blender, a Henschel mixer, or the like, and then melt-kneading is further performed using a single screw extruder, a multi-screw extruder, or the like, and a method in which melt-kneading is performed using a kneader, a Banbury mixer, or the like.

The ethylene-$\alpha$-olefin copolymer according to the present embodiment or a resin composition obtained by blending another additional optional component into the ethylene-$\alpha$-olefin copolymer according to the present embodiment is used for, for example, a sheet, a container, an insulator for an electric wire, a cable, or the like, a sheath, or a solar cell sealing material.

As a method for molding the ethylene-$\alpha$-olefin copolymer according to the present embodiment or a resin composition obtained by blending another additional optional component into the ethylene-$\alpha$-olefin copolymer according to the present embodiment into various products, a known molding method can be used. Examples of the known molding method include an extrusion molding method and a coating extrusion molding method such as coating of an electric wire or a pipe.

[Solar cell sealing material and solar cell]

The ethylene-$\alpha$-olefin copolymer according to the present embodiment or a resin composition obtained by blending another additional optional component into the ethylene-$\alpha$-olefin copolymer according to the present embodiment can be used for a solar cell sealing material (hereinafter, also simply referred to as a "sealing material"). The solar cell sealing material is obtained by forming the ethylene-$\alpha$-olefin copolymer according to the present embodiment or the polyethylene resin composition into a pellet or a sheet. By using this solar cell sealing material, a solar cell module can be manufactured by fixing a solar cell element together with upper and lower protective materials. As such a solar cell module, various types of modules can be exemplified. Examples thereof include: a solar cell module having a structure in which a solar cell element is sandwiched between sealing materials, such as a structure of upper transparent protective material/sealing material/solar cell element/sealing material/lower protective material; a solar cell module having a structure in which a sealing material and an upper transparent protective material are formed on a solar cell element formed on an inner peripheral surface of a lower substrate protective material; and a solar cell module having a structure in which a sealing material and a lower protective material are formed on a solar cell element formed on an inner peripheral surface of an upper transparent protective material, for example, an amorphous solar cell element formed on a fluororesin-based transparent protective material by sputtering or the like.

The solar cell element is not particularly limited, and various solar cell elements, for example, a silicon-based solar cell element such as a single crystal silicon, a polycrystalline silicon, or an amorphous silicon, and group III-V and group II-VI compound semiconductor-based solar cell elements such as gallium-arsenic, copper-indium-selenium, and cadmium-tellurium can be used. In the present invention, glass is preferably used for a substrate.

Examples of the upper protective material constituting the solar cell module include glass, an acrylic resin, a polycarbonate, a polyester, and a fluorine-containing resin. The lower protective material is a single-layer or multilayer sheet made of metal, various thermoplastic resin films, or the like, and examples thereof include a single-layer or multilayer protective material made of, for example, metal such as tin, aluminum, or stainless steel, an inorganic material such as glass, a polyester, an inorganic vapor-deposited polyester, a fluorine-containing resin, or a polyolefin. Such an upper and/or lower protective material can be subjected to primer treatment in order to enhance adhesion with the sealing material. In the present invention, glass is preferably used for the upper protective material.

The solar cell sealing material may be used as a pellet, but is usually molded into a sheet shape having a thickness of about 0.1 to 1 mm and used. When the thickness of the solar cell sealing material is in the above range, strength can be increased, adhesion is sufficient, and transparency can be maintained. The thickness is preferably 0.25 to 0.6 mm. When the thickness of the sheet-shaped solar cell sealing material is 0.25 mm or more, impact can be sufficiently alleviated, and for example, even when the sheet-shaped solar cell sealing material is thinned so as to have the thickness of about 0.25 mm, the sheet-shaped solar cell sealing material can have both molding characteristics and heat resistance at a sufficiently preferable level. When the thickness is 0.6 mm or less, an impact alleviating effect is sufficient, the sheet-shaped solar cell sealing material can meet a demand for thinning the solar cell module, and the sheet-shaped solar cell sealing material is economical.

The sheet-shaped solar cell sealing material may be a multilayer sheet having a structure of skin layer-core layer-skin layer. The skin layer is formed on the outermost surface of the sheet-shaped solar cell sealing material, and is preferably a layer having a relatively low density and a low melting point. The core layer is preferably a layer having a relatively high density and a high melting point. The ethylene-$\alpha$-olefin copolymer according to the present embodiment may be used for the skin layer or the core layer of the sheet-shaped solar cell sealing material. The ethylene-$\alpha$-olefin copolymer according to the present embodiment may be used for both the skin layer and the core layer.

When the sheet-shaped solar cell sealing material is a multilayer sheet having a structure of skin layer-core layer-skin layer, the core layer does not have to contain a crosslinking agent or a crosslinking aid.

The core layer may contain a silane-modified polyethylene-based resin. When the silane-modified polyethylene-based resin is added to the core layer, the silane-modified polyethylene-based resin may have a mass average molecular weight of 70,000 or more in terms of polystyrene and a melting point of about 90°C. In the sheet-shaped solar cell sealing material, the silane-modified polyethylene-based resin preferably acts as an intermediate melting point resin component.

The density of the sealing material composition for the core layer is preferably 0.905 g/cm$^3$ or more and 0.925 g/cm$^3$ or less, and more preferably 0.910 g/cm$^3$ or more and 0.920 g/cm$^3$ or less.

The melting point of the sealing material composition for the core layer is preferably 70°C or higher and 110°C or lower, and more preferably 80°C or higher and 100°C or lower. By maintaining the melting point of the sealing material composition for the core layer at 70°C or higher as described above, required heat resistance can be imparted to the solar cell sealing material. In relation to the heating conditions during melt molding for forming a sheet as the sheet-shaped solar cell sealing material and during thermal lamination treatment for integration as the solar cell module, the melting point of the sealing material composition for the core layer only needs to be generally about 110°C or lower. The melting point of the sealing material composition for the core layer is preferably 100°C or lower from a viewpoint of sufficiently enhancing molding characteristics of the sheet-shaped solar cell sealing material.

The sealing material composition for the skin layer may contain a silane-modified polyethylene-based resin. When a silane-modified polyethylene-based resin is added to the sealing material composition for the skin layer, a silane-modified polyethylene-based resin having a weight average molecular weight of 70,000 or more in terms of polystyrene and a melting point of about 90°C can be used. In the sheet-shaped solar cell sealing material, the silane-modified polyethylene-based resin preferably acts as an intermediate melting point resin component.

The density of the sealing material composition for the skin layer is preferably 0.880 g/cm$^3$ or more and 0.910 g/cm$^3$ or less, and more preferably 0.880 g/cm$^3$ or more and 0.899 g/cm$^3$ or less.

The melting point of the sealing material composition for the skin layer is preferably 70°C or higher and 90°C or lower, and more preferably 70°C or higher and 80°C or lower. As long as the melting point of the skin layer can be maintained within the above range similarly to the core layer, polyethylene-based resins having different melting points can be appropriately mixed to obtain a sealing material composition for the skin layer. Preferable blending examples of material resins of the sealing material composition for the core layer include a resin composition in which three polyethylene-based resins having melting points of 60°C, 90°C, and 97°C are mixed in an amount of 65 parts by mass, 8 parts by mass, and 20 parts by mass, respectively. In this resin composition, the melting point of the entire core layer can be set to 73°C. By setting the melting point of the sealing material composition for the skin layer to 70°C or higher, required heat resistance can be imparted to the solar cell sealing material. By setting the melting point of the sealing material composition for the skin layer to 90°C or lower, molding characteristics of the sealing material sheet at the time of integration as the solar cell module can be maintained in a preferable range.

The silane-modified polyethylene-based resin contained in each layer is preferably a high molecular weight type silane-modified polyethylene-based resin.

The thickness of the core layer in the sheet-shaped solar cell sealing material is preferably 0.2 mm or more and 0.4 mm or less, and more preferably 0.25 mm or more and 0.35 mm or less. The thickness of each layer of the skin is preferably 0.03 mm or more and 0.1 mm or less, and more preferably 0.035 mm or more and 0.080 mm or less. The total thickness of the two layers of skin stacked on both surfaces of the core layer is preferably 1/20 or more and 1/3 or less, and more preferably 1/15 or more and 1/4 or less of the total thickness of the sheet-shaped solar cell sealing material. By setting the thickness of each layer of the sheet-shaped solar cell sealing material within such a range, heat resistance and molding characteristics of the sheet-shaped solar cell sealing material can be maintained within favorable ranges.

The sheet-shaped solar cell sealing material can be manufactured by a known sheet forming method using a T-die extruder, a calendering machine, or the like. The sheet-shaped solar cell sealing material can be obtained, for example, by adding a crosslinking agent to an ethylene-$\alpha$-olefin copolymer, dry-blending a hindered amine-based light stabilizer, and furthermore additives such as a crosslinking aid, a silane coupling agent, an ultraviolet absorber, an antioxidant, and a light stabilizer in advance as necessary, supplying the obtained blend to a T-die extruder through a hopper thereof, and extruding the blend into a sheet shape at an extrusion temperature of 80 to 150°C. In the dry blending, some or all of the additives can be used in a form of a masterbatch. In addition, in T-die extrusion and calendering, a polyethylene resin composition in which a part or all of the additives are melted and mixed in advance with an amorphous $\alpha$-olefin-based copolymer can also be used. For the melting and mixing, a single screw extruder, a twin screw extruder, a Banbury mixer, a kneader, or the like can be used. The molded sheet is wound around a paper tube for easy storage and transportation, but at this time, the sheets may adhere to each other (blocking may occur). When blocking occurs, the sheet cannot be stably fed when the sheet is fed and used in the next step, and productivity is lowered. Therefore, blocking is generally avoided by roughening a sheet surface or forming an uneven structure.

In manufacturing a solar cell module, the module having the above-described structure can be formed by a method in which a sheet of the solar cell sealing material is prepared in advance, and the sheet of the solar cell sealing material is pressure-bonded at a temperature at which the polyethylene resin composition of the solar cell sealing material is melted, for example, 150 to 200°C.

On the other hand, when a solar cell module is manufactured, the solar cell sealing material is temporarily bonded to a solar cell element and a protective material at a temperature at which an organic peroxide is not substantially decomposed and the solar cell sealing material is melted, and then the temperature is raised to make it possible to perform sufficient bonding and crosslinking of an ethylene-$\alpha$-olefin copolymer. In this case, in order to obtain a solar cell module having favorable heat resistance in which the melting point (DSC method) of the solar cell sealing material is 85°C or higher and a storage elastic modulus at 150°C is 103 Pa or higher, crosslinking is preferably performed such that a gel fraction (1 g of a sample is immersed in 100 ml of xylene, heated at 110°C for 24 hours, and then filtered with a 400 mesh wire mesh, and a mass fraction of an unmelted portion is measured.) in the solar cell sealing material is preferably 50 to 98%, and more preferably 70 to 95%.

In operation of sealing the solar cell element, for example, there is a method in which the solar cell element is covered with the solar cell sealing material, then the solar cell element is heated to a temperature at which the organic peroxide is not decomposed for about several minutes to ten minutes to temporarily bond the solar cell sealing material to the solar cell element, and then the resulting product is heated at a high temperature of about 150 to 200°C at which the organic peroxide is decomposed in an oven for five minutes to 30 minutes to bond the solar cell sealing material to the solar cell element.

The present invention includes the following aspects.

[1] An ethylene-$\alpha$-olefin copolymer satisfying all of the following requirements (i) to (iv):

(i) A Vicat softening point is 85.0°C or lower;
(ii) When a melting torque at 160°C is X [N·m] and a melt flow rate is Y [g/10 min], a value of $X + 6.5 \times Ln(Y)$ is 23.0 or less;.
(iii) When a differential molecular weight distribution curve is divided into three normal distribution curves, a ratio of a sum of peak heights of a middle molecular weight distribution component (component B) and a high molecular weight component (component C) to a peak height of a low molecular weight component (component A) is 10.00 or more; and
(iv) A melt flow rate is 0.10 g/10 min or more and 10.00 g/10 min or less.

[2] The ethylene-$\alpha$-olefin copolymer according to [1], in which the Vicat softening point of the ethylene-$\alpha$-olefin copolymer is 80.0°C or lower.

[3] The ethylene-$\alpha$-olefin copolymer according to [1] or [2], in which the value of $X + 6.5 \times Ln(Y)$ of the ethylene-$\alpha$-olefin copolymer is 21.0 or less.

[4] The ethylene-$\alpha$-olefin copolymer according to any one of [1] to [3], in which when a differential molecular weight distribution curve of the ethylene-$\alpha$-olefin copolymer is divided into three normal distribution curves, a ratio of a sum of peak heights of a middle molecular weight distribution component (component B) and a high molecular weight component (component C) to a peak height of a low molecular weight component (component A) is 11.00 or more.

[5] The ethylene-$\alpha$-olefin copolymer according to any one of [1] to [4], in which the melt flow rate of the ethylene-$\alpha$-olefin copolymer is 0.20 g/10 min or more and 10.00 g/10 min or less.

[6] The ethylene-$\alpha$-olefin copolymer according to any one of [1] to [5], in which the $\alpha$-olefin of the ethylene-$\alpha$-olefin copolymer contains at least one selected from propylene, butene, and hexene.

[7] A method for manufacturing an ethylene-$\alpha$-olefin copolymer having a density of 911 kg/m$^3$ or less by copolymerizing ethylene and an $\alpha$-olefin having 3 to 20 carbon atoms in the presence of an olefin polymerization catalyst, the method including
adjusting polymerization conditions such that a value A defined by the following formula (1) is 67.0 or more and 100.0 or less.
[Mathematical formula 3]

$$A = \frac{\dfrac{\text{Number of short chain branches} + 2 \times (\text{Concentration of } \alpha\text{-olefin having 3 to 20 carbon atoms} + \text{Concentration of alkane})}{28}}{\left(1 + 1/\left(\dfrac{\text{Concentration of ethylene}}{\text{Concentration of gas other than hydrocarbon}}\right)\right)^{\text{Polymerization temperature}}} \times \text{Polymerization temperature} \quad \dots (1)$$

[8] The method for manufacturing an ethylene-α-olefin copolymer according to [7], in which

the concentration of a gas other than a hydrocarbon in the formula (1) is a sum of the concentration of hydrogen and the concentration of nitrogen, and
the concentration of nitrogen is 5 mol% or more and 30 mol% or less.

[9] The method for manufacturing an ethylene-α-olefin copolymer according to [7] or [8], in which the polymerization temperature in the formula (1) is 66°C or higher and 84°C or lower.
[10] The method for manufacturing an ethylene-α-olefin copolymer according to any one of [7] to [9], in which the olefin polymerization catalyst is a polymerization catalyst obtained by using, as catalyst components, a solid particulate co-catalyst component obtained by causing at least one co-catalyst component selected from an organoaluminum compound, an organoaluminumoxy compound, a boron compound, and an organozinc compound to be carried on a particulate carrier, and a metallocene complex having a ligand having a structure in which two cyclopentadienyl type anion skeletons are bonded to each other by at least one crosslinking group selected from an alkylene group and a silylene group.

Examples

Hereinafter, the present invention will be described more specifically with reference to Examples, but the present invention is not limited to these Examples.

[Test Example 1]

Each item in Examples 1-1 to 1-7 and Comparative Examples 1-1 to 1-5 was measured or evaluated by the following method.

(1) Melt flow rate (MFR, unit: g/10 min)

A melt flow rate was measured in accordance with Method A defined in JIS K7210-1995 at a temperature of 190°C under a load of 2.16 kg.

(2) Density (unit: $kg/m^3$)

Annealing was performed in accordance with JIS K6760-1995, and then a density was measured by Method A in accordance with the method defined in JIS K7112-1980.

(3) Differential molecular weight distribution curve (GPC)

The molecular weight of a sample was measured by a GPC method under the following conditions. Orthodichlorobenzene (0.1 w/V dibutylhydroxytoluene was added as an antioxidant) was used as a solvent, and the concentration of the sample was 1 mg/mL. As an apparatus, HLC-8121GPC/HT manufactured by Tosoh Corporation was used. As a measurement column, three GPC columns, TSKgel GMHHR-H(S)HT 7.5 mm, I.D. × 300 mm, manufactured by Tosoh Corporation were connected to each other and used. Orthodichlorobenzene (0.1 w/V dibutylhydroxytoluene was added as an antioxidant) was used as a mobile phase, a flow rate was set to 1 mL/min, a column oven temperature was set to 140°C, an autosampler temperature was set to 140°C, and a system oven temperature was set to 40°C. A differential refractive index detector (RID) was used as a detector, a RID cell temperature was 140°C, and an injection amount of the sample solution was 300 μL. The obtained measured value was multiplied by a Q factor value of 41.3 to obtain a molecular weight (M) in terms of polystyrene.

(4) Peak division of differential molecular weight distribution curve

A specific method for dividing a differential molecular weight distribution curve using Python in the present invention is as follows.

As a first step, an Anaconda version of a corresponding model is downloaded and installed, and an environment is set.

As a second step, a title of a first column of electronic data of the differential molecular weight distribution curve is set to "x", and a title of a second column is set to "y". Next, a logM value is input to a second row and after in the first column, dwt/d(logM) is input to a second row and after in the second column, and this data is stored as a csv file ('data name: csv').

In a third step, the following code was input and execution was performed using a Jupyter Notebook (Anaconda 3) .

```
# Read module
from scipy.optimize import curve_fit
import numpy as np
import matplotlib.pyplot as pit
import matplotlib.cm as cm
import pandas as pd

# Input data
dataset = pd.read_csv('data name.csv')
x = dataset['x']
y = dataset['y']

# Define fitting function
def func(x, *params):

    # Determine number of functions to be fitted by
length of params
    num_func = int(len(params)/3)

    # Insert each parameter into Gaussian function to add
Gaussian function to y_list
    y_list = []
    for i in range(num_func):
        y = np.zeros_like (x)
        param_range = list(range(3*i,3*(i+1),1))
        amp = params[int(param_range[0])]
        ctr = params[int(param_range[1])]
        wid = params[int(param_range[2])]
        y = y + amp * np.exp(-((x - ctr)/wid)**2)
        y_list.append(y)

    # Superimpose all Gaussian functions in y_list
    y_sum = np.zeros_like (x)
    for i in y_list:
        y_sum = y_sum + i

    # Add background
    y_sum = y_sum + params[-1]
    return y_sum

# Define Gaussian function used for fitting: y =
amp*exp[-((x - ctr)/wid)^2]
# amp = 1/(sqrt(2pi)*sig), ctr = m, wid = 2sig
def fit_plot(x, *params):
    num_func = int(len(params)/3)
    y_list = []
    for i in range (num_func):
        y = np.zeros_like(x)
        param_range = list(range(3*i,3*(i+1),1))
```

```
        amp = params[int(param_range[0])]
        ctr = params[int(param_range[1])]
        wid = params[int(param_range[2])]
        y = y + amp * np.exp(-((x - ctr)/wid)**2) + params[-
1]
        y_list.append(y)
        return y_list


        # Set initial value
        # guess.appen([amp,ctr,wid]) --> amp: height, ctr:
center value, wid: width
        # When any of the following cases applies, initial
        values of "Amp", "Center", and "Width" are changed, and
        execution is performed until any of the following cases
        does not apply.
        # When runtime error is output
        # When any one or more of Amp, Center, and Width is a
        negative value
        # When an absolute value of Baseline exceeds 3
        guess = []
        guess.append([initial value of "Amp",initial value of
"Center",initial value of "Width"]) # 1st curve
        guess.append([initial value of "Amp",initial value of
"Center",initial value of "Width"]) # 2nd curve
        guess.append([initial value of "Amp",initial value of
"Center",initial value of "Width"]) # 3rd curve


        # Initial value of background
        background = 0.1


        # Couple initial value lists
        guess_total = []
        for i in guess:
        guess_total.extend(i)
        guess_total.append(background)


        # Substitute Fitting optimized parameters into popt
        popt, pcov = curve_fit(func, x, y, p0=guess_total)


        # Plot experimental data and optimized data
        fit = func(x, *popt)
        plt.figure(figsize=(8,5))
        plt.scatter(x, y, marker="o", s=50, c="blue")
        plt.plot(x, fit , ls='-', c='red', lw=3)


        # Plot each curve
        y_list = fit_plot(x, *popt)
        baseline = np.zeros_like(x) + popt[-1]
        for n, i in enumerate(y_list):
        plt.fill_between(x, i, baseline,
facecolor=cm.rainbow(n/len(y_list)), alpha=0.7)


        # List parameters, Add Baseline to whole
        data = {
        "C1" : popt[0:3],
        "C2" : popt[3:6],
        "C3" : popt[6:9],
        "Baseline" : popt[9:10],
        }


        # Display parameters in list format
        idx = ["Amp","Center","Width"]
        df = pd.DataFrame(data, index=idx)
```

df

Peak height ratio [unit: none]

The three peak center ("Center") values divided by the above method were defined as component A, component B, and component C from a smaller side, and a ratio of a sum of peak heights of component B and component C to a peak height of component A ("Amp") was determined.

(5) Vicat softening point (unit: °C)

The sample was pressed by hot pressing to prepare a sheet having a thickness of about 5 mm. The obtained sheet was measured in accordance with Method A50 defined in JIS K7206-1999.

(6) Melting torque (unit: N·m)

A melting torque was measured using a Labo Plastomill under the following conditions. Labo Plastomill 3S150 manufactured by Toyo Seiki Seisaku-sho, Ltd. was used as an apparatus. 38 g of the sample and 400 ppm of an antioxidant Sumilizer GP manufactured by Sumitomo Chemical Co., Ltd. were mixed, and the mixture was kneaded for 30 minutes under conditions of a set temperature of 160°C and a screw rotation speed of 60 rpm. Melting torque data during kneading was acquired at intervals of 0.125 seconds, and an average value for five minutes from a time point where 25 minutes had elapsed after start of kneading to an end of measurement was determined.

(7) Filler acceptability (unit: %)

A sample was prepared using a Labo Plastomill under the following conditions. Labo Plastomill 3S150 manufactured by Toyo Seiki Seisaku-sho, Ltd. was used as an apparatus. 150 parts of magnesium hydroxide KISUMA 5B manufactured by Kyowa Chemical Industry Co., Ltd. was mixed with 40 g of the sample, and the mixture was kneaded for 10 minutes under conditions of a set temperature of 150°C and a screw rotation speed of 50 rpm. The resulting kneaded product was allowed to stand at 150°C for five minutes (preheating step), pressurized at 150°C and 5 MPa for five minutes (pressing step), and slowly cooled at 30°C for five minutes (slow cooling step) to obtain a press sheet having a thickness of 1 mm. The obtained sheet was cut into a shape of JIS-K7127 type 5. The cut sheet was set in a Tensilon universal tester RTG-1225-PL manufactured by ORIENTEC CORPORATION, and a tensile test was performed at a tensile speed of 200 mm/min in accordance with JIS-K7127 using a 200 N load cell. Elongation between gauge lines at a breaking point was defined as filler acceptability.

(8) Appearance of extrusion product

Using a Capilograph manufactured by Toyo Seiki Seisaku-sho, Ltd., melt extrusion was performed at a piston lowering rate of 100 mm/min using an orifice made of tungsten carbide having a barrel set temperature of 190°C, L = 40 mm/D = 1 mm, and an inflow angle of 90 degrees, and extruded strands were collected. A surface of the strand was visually observed, and a sample with good appearance was evaluated as o, and a sample with poor appearance was evaluated as ×.

[Manufacture Example of component (H)]

[Example 1-1]

(1) Manufacture of component (H)

Component (H) was manufactured by a similar method to preparation of component (A) in Examples 1(1) and 1(2) described in JP 2009-79180 A. As a result of elemental analysis, Zn = 11% by mass and F = 6.4% by mass were obtained.

(2) Manufacture of prepolymerization catalyst component

To an autoclave having an internal volume of 210 liters previously replaced with nitrogen and equipped with a stirrer, 41 liters of butane was added, and then 60.9 mmol of racemic ethylene bis(1-indenyl) zirconium diphenoxide was added thereto. The autoclave was heated to 50°C, and stirring was performed for two hours. Next, 0.60 kg of component (H) obtained above was added to the autoclave. Thereafter, the temperature of the autoclave was lowered to 31°C, and after the inside of the system was stabilized, 0.1 kg of ethylene and 0.1 liters of hydrogen (normal temperature and normal pressure) were added to the autoclave. Subsequently, 240 mmol of triisobutylaluminum was added thereto to initiate prepolymerization. Ethylene and hydrogen (normal temperature and normal pressure) were supplied to the autoclave at 0.5 kg/hr and 1.1 L/hr, respectively, for 30 minutes, then the temperature was raised to 50°C, and ethylene and hydrogen (normal temperature and normal pressure) were supplied to the autoclave at 2.7 kg/hr and 8.2 L/hr, respectively. Prepolymerization was performed for a total of 10.0 hours. After completion of the prepolymerization, ethylene, butane, hydrogen, and the like were purged, and the remaining solid was vacuum-dried at room temperature to obtain a prepolymerization catalyst component containing 4.14 g of polyethylene per g of component (H). The polyethylene had [$\eta$] of 1.26 dl/g.

(3) Manufacture of component (A) (LLDPE1)

In the presence of the prepolymerization catalyst component obtained in the above (2), copolymerization of ethylene and 1-hexene was performed with a continuous fluidized bed gas phase polymerization apparatus to obtain powder of an ethylene-1-hexene copolymer (hereinafter, referred to as LLDPE1). As polymerization conditions, polymerization temperature was set to 72°C, polymerization pressure was set to 2.0 MPa, a molar ratio of hydrogen to ethylene was set to 0.49%, and a molar ratio of 1-hexene to the total of ethylene and 1-hexene was set to 2.2%. Ethylene, 1-hexene, and hydrogen were continuously supplied in order to maintain a constant gas composition during the polymerization.

In addition, the prepolymerization catalyst component, triisobutylaluminum, and triethylamine were continuously supplied, and the total powder mass of 80 kg in the fluidized bed was maintained constant. The amount of triisobutylaluminum to LLDPE1 was set to 0.43 mmol/kg. A molar ratio of triethylamine to triisobutylaluminum was set to 3%. Average polymerization time was 5.0 hr. The obtained powder of LLDPE1 was granulated using an extruder (LCM50 manufactured by Kobe Steel, Ltd.) under conditions of a feed speed of 50 kg/hr, a screw rotation speed of 338 rpm, a gate opening of 50%, a suction pressure of 0.1 to 0.2 MPa, and a resin temperature of 180 to 200°C to obtain pellets of LLDPE1. The physical properties of the obtained pellets of LLDPE1 were evaluated, and results thereof are presented in Table 2.

[Examples 1-2 to 1-7]

Pellets of LLDPE2 to 7 were obtained under similar conditions to Example 1-1 except that the conditions presented in Table 1 were changed.

[Comparative Example 1-1]

Pellets of LLDPE 8 were obtained under similar conditions to Example 1-1 except that the conditions presented in Table 1 were changed.

[Comparative Example 1-2]

Pellets of LLDPE9 (MFR = 0.28 g/10 min, density = 913 kg/m$^3$) manufactured by Sumitomo Chemical Co., Ltd. were used.

[Comparative Example 1-3]

Pellets of LLDPE10 (MFR = 1.97 g/10 min, density = 913 kg/m$^3$) manufactured by Sumitomo Chemical Co., Ltd. were used.

[Comparative Example 1-4]

Pellets of LLDPE11 (MFR = 1.25 g/10 min, density = 904 kg/m$^3$) manufactured by Sumitomo Chemical Co., Ltd. were used.

[Comparative Example 1-5]

Pellets of LDPE1 (MFR = 0.34 g/10 min, density = 922 kg/m$^3$) manufactured by Sumitomo Chemical Co., Ltd. were used.

[Table 1]

| Item | | Example 1-1 | Example 1-2 | Example 1-3 | Example 1-4 | Example 1-5 | Example 1-6 | Example 1-7 | Comparative Example 1-1 |
|---|---|---|---|---|---|---|---|---|---|
| LLDPE | - | LLDPE 1 | LLDPE 2 | LLDPE 3 | LLDPE 4 | LLDPE 5 | LLDPE 6 | LLDPE 7 | LLDPE 8 |
| Polymerization temperature | °C | 72 | 77 | 77 | 77 | 74 | 84 | 84 | 80 |
| Polymerization pressure | MPa | 2.0 | 2.0 | 2.0 | 2.0 | 2.0 | 2.0 | 2.0 | 2.0 |
| Hydrogen to ethylene | mol% | 0.49 | 0.81 | 0.92 | 0.77 | 1.49 | 1.27 | 0.76 | 1.20 |
| 1-Hexene to total of ethylene and 1-hexene | mol% | 2.2 | 2.5 | 2.8 | 2.8 | 2.8 | 2.2 | 2.9 | 1.9 |
| Triisobutylaluminum to LLDPE | mmol/kg | 0.43 | 0.38 | 0.36 | 0.44 | 0.36 | 0.38 | 0.37 | 0.54 |
| Triethylamine to triisobutylaluminum | mol% | 3 | 10 | 10 | 30 | 3 | 3 | 3 | 3 |
| Average polymerization time | hr | 5.0 | 4.1 | 4.1 | 3.8 | 3.4 | 3.5 | 3.5 | 4.4 |

[Table 2]

| Item | | | Example 1-1 | Example 1-2 | Example 1-3 | Example 1-4 | Example 1-5 | Example 1-6 | Example 1-7 | Comparative Example 1-1 | Comparative Example 1-2 | Comparative Example 1-3 | Comparative Example 1-4 | Comparative Example 1-5 |
|---|---|---|---|---|---|---|---|---|---|---|---|---|---|---|
| LLDPE or LDPE | | - | LLDPE 1 | LLDPE 2 | LLDPE 3 | LLDPE 4 | LLDPE 5 | LLDPE 6 | LLDPE 7 | LLDPE 8 | LLDPE 9 | LLDPE 10 | LLDPE 11 | LDPE 1 |
| MFR | | g/10 min | 0.43 | 0.26 | 0.53 | 0.33 | 3.51 | 0.40 | 0.33 | 0.39 | 0.28 | 1.97 | 1.25 | 0.34 |
| Vicat softening point | | °C | 56.0 | 67.0 | 62.0 | 66.7 | 57.6 | 78.9 | 66.5 | 79.0 | 86.0 | 83.1 | 84.8 | 94.4 |
| Log M | Component A | | 4.23 | 4.23 | 4.37 | 4.33 | 3.89 | 4.24 | 4.19 | 4.24 | 4.26 | 4.34 | 4.43 | 3.60 |
| | Component B | | 5.08 | 5.08 | 5.06 | 5.08 | 3.91 | 5.00 | 5.04 | 5.00 | 4.94 | 4.85 | 4.48 | 4.83 |
| | Component C | | 5.61 | 5.62 | 5.57 | 5.61 | 4.88 | 5.59 | 5.62 | 5.59 | 5.58 | 5.52 | 5.23 | 5.36 |
| Peak height ratio | Component A | | 6.66 | 6.38 | 7.25 | 8.35 | 9.12 | 8.90 | 6.80 | 10.50 | 11.40 | 12.10 | 6.40 | 4.00 |
| | Component B | | 84.30 | 82.63 | 85.37 | 84.69 | 88.19 | 74.10 | 82.40 | 71.70 | 65.60 | 62.20 | 3.20 | 45.70 |
| | Component C | | 12.51 | 14.41 | 13.55 | 14.45 | 10.48 | 24.60 | 16.00 | 23.00 | 33.20 | 30.40 | 97.70 | 59.80 |
| | (B + C)/A | | 14.54 | 15.21 | 13.64 | 11.87 | 10.82 | 11.12 | 14.38 | 9.03 | 8.67 | 7.65 | 15.70 | 26.26 |
| Kneading torque | | N·m | 16.3 | 17.9 | 13.5 | 17.2 | 10.7 | 13.4 | 16.1 | 13.5 | 12.7 | 10.2 | 25.4 | 15.3 |
| Kneading torque + 6.5*Ln (MFR) | | - | 10.8 | 9.1 | 9.4 | 10.0 | 18.9 | 7.4 | 8.9 | 7.4 | 4.9 | 14.7 | 26.9 | 8.3 |
| Filler acceptability | | % | 790 | 580 | 340 | 150 | 230 | 80 | 310 | 10 | 0 | 0 | 370 | 0 |
| Evaluation of extrusion processability | | ○ or × | ○ | ○ | ○ | ○ | ○ | ○ | ○ | ○ | ○ | ○ | × | ○ |

Table 2 indicates that, in Examples 1-1 to 1-7 satisfying all the constituent requirements of the present invention, values of filler acceptability were larger than those in Comparative Examples 1-1 to 1-5, and evaluation of extrusion processability was also favorable. Therefore, it is indicated that the ethylene-$\alpha$-olefin copolymer according to an embodiment of the present invention has relatively excellent acceptability of a filler contained as a flame retardant while maintaining appropriate extrusion processability.

[Test Example 2]

Each item in Examples 2-1 to 2-8 and Comparative Examples 2-1 to 2-6 was measured or evaluated by the following method.

(1) Melt flow rate (MFR, unit: g/10 min)

A melt flow rate was measured in accordance with Method A defined in JIS K7210-1995 at a temperature of 190°C under a load of 2.16 kg.

(2) Vicat softening point (unit: °C)

The sample was pressed by hot pressing to prepare a sheet having a thickness of about 5 mm. The obtained sheet was measured in accordance with Method A50 defined in JIS K7206-1999.

(3) Density (unit: $kg/m^3$)

A density was measured in accordance with the method defined in JIS K7112-1980.

(4) Number of short chain branches (unit: 1/1000C)

<$^{13}$C-NMR measurement of standard product>

A carbon nuclear magnetic resonance ($^{13}$C-NMR) spectrum of a standard product was measured under the following measurement conditions. FS140A manufactured by Sumitomo Chemical Co., Ltd. was used as the standard product.

(Measurement conditions)

    Apparatus: AVANCE 600 manufactured by Bruker Corporation
    Measurement probe: 10 mm cryoprobe
    Measurement solvent: 1,2-dichlorobenzene-d4
    Measurement temperature: 135°C
    Measurement method: proton decoupling method
    Pulse width: 45 degrees
    Pulse repeating time: four seconds
    Window function: negative exponential function and Gaussian function
    Number of integrations: 5000

<Number of short chain branches of standard product>

In the obtained spectrum of carbon nuclear magnetic resonance ($^{13}$C-NMR), analysis processing was performed by an exponential function, and when a sum of peak areas of all peaks having a peak top at 5 to 50 ppm was 1000, a peak area derived from a methine carbon atom to which a branch having 2 carbon atoms was bonded was calculated as a short chain branch amount. Under the present measurement conditions, the short chain branch amount was determined from a peak area of peaks at 10.9 to 11.4 ppm.

<Infrared spectrometry>

For example, as described in "Polymer Analysis Handbook, New Edition, First edition, page 590, edited by The Japan Society for Analytical Chemistry", it is known that a peak of a short chain branch of an ethylene-$\alpha$-olefin copolymer is observed at 1378 cm$^{-1}$ in an infrared spectroscopic spectrum. The ethylene-$\alpha$-olefin copolymer was heated at 6 MPa for five minutes using a hot press preheated at 150°C for five minutes, and then cooled in a water-cooled die for five minutes to be molded into a thickness of 0.01 cm. The thickness after molding was measured with a thickness meter. An infrared spectroscopic spectrum of the molded ethylene-$\alpha$-olefin copolymer was measured under the following measurement conditions. An infrared spectroscopic spectrum of the standard product for which $^{13}$C-NMR had been measured was also measured in the same procedure.

(Measurement conditions)

Apparatus: FTIR 470 plus manufactured by JASCO Corporation
Detector: TGS
Number of scans: 16 times
Resolution: 2 cm$^{-1}$
Vertical axis: absorbance

<Number of short chain branches>

In the obtained infrared spectroscopic spectrum, a point at 955 cm$^{-1}$ and a point at 1790 cm$^{-1}$ were connected to each other by a straight line to form a baseline. The number B of short chain branches was calculated by formula (i) .

$$B = Bs \times F/Fs \quad \text{Formula (i)}$$

Here, Bs is the number of short chain branches determined by $^{13}$C-NMR of the standard product, F is determined by formula (ii), and Fs is determined by formula (iii).

$$F = (A1/(\rho \times t) - 0.95A2/(\rho \times t) + 3.8) \quad \text{Formula (ii)}$$

$$Fs = (A1s/(\rho s \times ts) - 0.95A2/(\rho s \times ts) + 3.8) \quad \text{Formula}$$

$$(iii)$$

Here, A1 is the height of a peak at 1378 cm$^{-1}$ from the baseline in the infrared spectroscopic spectrum of the ethylene-$\alpha$-olefin copolymer, $\rho$ is the density of the ethylene-$\alpha$-olefin copolymer (g/cm$^3$), t is the measured thickness of the ethylene-$\alpha$-olefin copolymer (cm), A2 is a maximum value of the heights in a range of 1281 to 1324 cm$^{-1}$ in an infrared spectroscopic spectrum of the ethylene-$\alpha$-olefin copolymer after subtraction of the baseline, A1s is the height of a peak at 1378 cm$^{-1}$ from the baseline in the infrared spectroscopic spectrum of the standard product, $\rho s$ is the density of the standard product (g/cm$^3$), ts is the measured thickness of the standard product (cm), and A2s is a maximum value of the heights in a range of 1281 to 1324 cm$^{-1}$ in an infrared spectroscopic spectrum of the standard product after subtraction of the baseline.

(5) Lump ratio (unit: wtppm)

The polymer powder extracted from the gas phase polymerization apparatus was caused to pass through a sieve with a sieve mesh of 10 mm, and a mass ratio of the amount of the polymer remaining on the sieve to the amount of the polymer that had passed through the sieve was determined as a lump ratio. Note that, in Comparative Example 2-2, the lump ratio could not be obtained because operation was difficult.

(6) Entrainment ratio (unit: wtppm)

Polymer particles that had been entrained from a top of the apparatus together with a gas circulating in the gas phase polymerization apparatus were collected using a solid-gas separation apparatus, and a mass ratio of the amount of the collected particles to the amount of the polymer that had passed through the sieve in the above (5) was calculated as a entrainment ratio. In Comparative Example 2-2, the entrainment ratio could not be obtained because operation was difficult.

(7) Operational evaluation

Operational evaluation was performed on the basis of the following indices.

o: A lump ratio and a entrainment ratio were relatively low, and stable operation was possible.

Level indication fluctuation: Level indication of the fluidized bed in the tank measured using a differential pressure gauge was disturbed, and it was difficult to continue operation.

Lump increase: A lump ratio increased.

Excessive entrainment: A entrainment ratio was excessive.

[Example 2-1]

In the presence of the prepolymerization catalyst component obtained in the above [Example 1-1] (2), copolymerization of ethylene and 1-hexene was performed with a continuous fluidized bed gas phase polymerization apparatus to obtain powder of LLDPE12. As polymerization conditions, polymerization temperature was set to 84°C, polymerization pressure was set to 2.0 MPaG, and the concentrations of ethylene, hydrogen, hexene, hexane, and nitrogen in the gas phase were maintained at 87.3mol%, 0.8mol%, 2.1mol%, 0.3mol%, and 9.5mol%, respectively. The prepolymerization catalyst component, triisobutylaluminum, and triethylamine were continuously supplied, and the total powder mass of 80 kg in the fluidized bed was maintained constant. The amount of triisobutylaluminum to LLDPE12 (X/PE) was set to 0.37 mmol/kg. A molar ratio of triethylamine to triisobutylaluminum (Z/X) was set to 3%. Average residence time was 3.9 hr. The obtained LLDPE12 powder had a density of 904 kg/m$^3$ and the number of short chain branches of 27.4. The obtained LLDPE12 powder had a lump ratio of 92 wtppm and a entrainment ratio of 118 wtppm.

[Examples 2-2 to 2-8]

Pellets of LLDPE13 to 19 were obtained under similar conditions to Example 2-1 except that the polymerization conditions presented in Table 3 were changed. The amount of triisobutylaluminum to LLDPE (X/PE), the molar ratio of triethylamine to triisobutylaluminum (Z/X), the average residence time, the density of the obtained LLDPE powder, the number of short chain branches, the lump ratio, and the entrainment ratio are presented in Table 3.

[Comparative Examples 2-1 to 2-6]

Pellets of LLDPE20 to 25 were obtained under similar conditions to Example 2-1 except that the polymerization conditions presented in Table 3 were changed. The amount of triisobutylaluminum to LLDPE (X/PE), the molar ratio of triethylamine to triisobutylaluminum (Z/X), the average residence time, the density of the obtained LLDPE powder, the number of short chain branches, the lump ratio, and the entrainment ratio are presented in Table 3.

[Table 3]

| Item | | Example 2-1 | Example 2-2 | Example 2-3 | Example 2-4 | Example 2-5 | Example 2-6 | Example 2-7 | Example 2-8 | Comparative Example 2-1 | Comparative Example 2-2 | Comparative Example 2-3 | Comparative Example 2-4 | Comparative Example 2-5 | Comparative Example 2-6 |
|---|---|---|---|---|---|---|---|---|---|---|---|---|---|---|---|
| LLDPE | | LLDPE 12 | LLDPE 13 | LLDPE 14 | LLDPE 15 | LLDPE 16 | LLDPE 17 | LLDPE 18 | LLDPE 19 | LLDPE 20 | LLDPE 21 | LLDPE 22 | LLDPE 23 | LLDPE 24 | LLDPE 25 |
| Density | kg/m$^3$ | 904 | 893 | 889 | 911 | 889 | 902 | 894 | 910 | 896 | 890 | 891 | 911 | 911 | 907 |
| Number of short chain branches | 1/1000 C | 27.4 | 30.2 | 33.0 | 21.3 | 32.6 | 26.0 | 31.3 | 24.0 | 31.7 | 34.0 | 32.6 | 20.9 | 21.8 | 25.2 |
| Polymerization temperature | °C | 84 | 77 | 72 | 80 | 67 | 66 | 77 | 84 | 83 | 77 | 74 | 84 | 82 | 66 |
| Concentration of α-olefin ([C6']) | mol% | 2.1 | 2.5 | 1.6 | 1.8 | 1.3 | 1.3 | 1.7 | 1.8 | 2.8 | 1.8 | 2.9 | 1.9 | 1.8 | 1.1 |
| Concentration of alkane ([C6]) | mol% | 0.3 | 0.1 | 0.1 | 4.9 | 0.0 | 0.2 | 0.1 | 0.2 | 0.1 | 0.1 | 0.1 | 4.9 | 4.7 | 0.1 |
| Concentration of ethylene | mol% | 87.3 | 91.8 | 68.7 | 84.8 | 69.6 | 84.0 | 74.9 | 89.8 | 90.0 | 67.1 | 92.9 | 85.4 | 85.4 | 78.8 |
| Concentration of hydrogen | mol% | 0.8 | 0.7 | 0.3 | 1.1 | 0.3 | 0.6 | 0.5 | 1.2 | 0.7 | 0.5 | 0.7 | 0.8 | 1.3 | 0.4 |
| Concentration of nitrogen | mol% | 9.5 | 4.9 | 29.3 | 7.4 | 28.7 | 13.9 | 22.8 | 7.0 | 6.4 | 30.5 | 3.4 | 7.1 | 6.8 | 19.6 |
| Lump ratio | wtppm | 92 | 156 | 432 | 450 | 420 | 38 | 77 | 198 | 628 | - | 1367 | 1316 | 737 | 110 |
| Entrainment ratio | wtppm | 118 | 11 | 49 | 41 | 758 | 637 | 83 | 109 | 6 | - | 21 | 3 | 5 | 1357 |
| A in formula (1) | - | 96.6 | 97.4 | 93.6 | 99.1 | 84.2 | 68.4 | 96.0 | 84.0 | 111.2 | 103.9 | 102.0 | 103.5 | 101.9 | 65.1 |
| Operational evaluation result | - | ○ | ○ | ○ | ○ | ○ | ○ | ○ | ○ | Level indication fluctuation | Level indication fluctuation | Level indication fluctuation | Lump increase | Lump increase | Excessive entrainment |
| Average residence time | hr | 3.5 | 3.9 | 5.2 | 4.2 | 3.9 | 9.9 | 4.2 | 3.8 | 3.5 | 5.0 | 5.5 | 3.3 | 3.8 | 4.8 |
| XIPE (X: triisobutylaluminum) | mmol/kg | 0.37 | 0.43 | 0.45 | 0.44 | 0.42 | 0.89 | 0.36 | 0.42 | 0.37 | 0.44 | 0.47 | 1.03 | 0.41 | 0.24 |

(continued)

| Item | | Example 2-1 | Example 2-2 | Example 2-3 | Example 2-4 | Example 2-5 | Example 2-6 | Example 2-7 | Example 2-8 | Comparative Example 2-1 | Comparative Example 2-2 | Comparative Example 2-3 | Comparative Example 2-4 | Comparative Example 2-5 | Comparative Example 2-6 |
|---|---|---|---|---|---|---|---|---|---|---|---|---|---|---|---|
| LLDPE | | LLDPE 12 | LLDPE 13 | LLDPE 14 | LLDPE 15 | LLDPE 16 | LLDPE 17 | LLDPE 18 | LLDPE 19 | LLDPE 20 | LLDPE 21 | LLDPE 22 | LLDPE 23 | LLDPE 24 | LLDPE 25 |
| Z/X (Z: Methylamine) | % | 3 | 3 | 3 | 3 | 3 | 3 | 3 | 3 | 3 | 3 | 10 | 3 | 3 | 4 |
| MFR | g/10 min | 0.54 | 0.73 | 0.43 | 0.59 | 0.71 | 6.82 | - | 0.43 | - | - | - | - | - | - |
| Vicat softening point | °C | 74.1 | 61.4 | 56.0 | 84.9 | 53.7 | 74.6 | - | 81.6 | - | - | - | - | - | - |

As can be seen from the results in Table 3, in Examples 2-1 to 2-8 satisfying all the constituent requirements of the present invention, the lump ratio and the entrainment ratio were relatively low, poor fluidity was relatively less likely to occur, and therefore stable operation was possible.

The ethylene-$\alpha$-olefin copolymer according to an embodiment of the present invention can increase acceptability of a filler while maintaining appropriate extrusion processability. Therefore, the ethylene-$\alpha$-olefin copolymer according to an embodiment of the present invention can be used in various industrial fields such as a sheet, a container, an insulator for an electric wire, a cable, or the like, a sheath, and a solar cell sealing material.

**Claims**

1. An ethylene-$\alpha$-olefin copolymer satisfying all of the following requirements (i) to (iv):

   (i) A Vicat softening point is 85.0°C or lower;
   (ii) When a melting torque at 160°C is X [N·m] and a melt flow rate is Y [g/10 min], a value of $X + 6.5 \times Ln(Y)$ is 23.0 or less;
   (iii) When a differential molecular weight distribution curve is divided into three normal distribution curves, a ratio of a sum of peak heights of a middle molecular weight distribution component (component B) and a high molecular weight component (component C) to a peak height of a low molecular weight component (component A) is 10.00 or more; and
   (iv) A melt flow rate is 0.10 g/10 min or more and 10.00 g/10 min or less.

2. The ethylene-$\alpha$-olefin copolymer according to claim 1, wherein the Vicat softening point of the ethylene-$\alpha$-olefin copolymer is 80.0°C or lower.

3. The ethylene-$\alpha$-olefin copolymer according to claim 1 or 2, wherein the value of $X + 6.5 \times Ln(Y)$ of the ethylene-$\alpha$-olefin copolymer is 21.0 or less.

4. The ethylene-$\alpha$-olefin copolymer according to claim 1 or 2, wherein when a differential molecular weight distribution curve of the ethylene-$\alpha$-olefin copolymer is divided into three normal distribution curves, the ratio of a sum of peak heights of a middle molecular weight distribution component (component B) and a high molecular weight component (component C) to a peak height of a low molecular weight component (component A) is 11.00 or more.

5. The ethylene-$\alpha$-olefin copolymer according to claim 1 or 2, wherein the melt flow rate of the ethylene-$\alpha$-olefin copolymer is 0.20 g/10 min or more and 10.00 g/10 min or less.

6. The ethylene-$\alpha$-olefin copolymer according to claim 1 or 2, wherein the $\alpha$-olefin of the ethylene-$\alpha$-olefin copolymer contains at least one selected from propylene, butene, and hexene.

7. A method for manufacturing an ethylene-$\alpha$-olefin copolymer having a density of 911 kg/m$^3$ or less by copolymerizing ethylene and an $\alpha$-olefin having 3 to 20 carbon atoms in a presence of an olefin polymerization catalyst, the method comprising
   adjusting polymerization conditions such that a value A defined by the following formula (1) is 67.0 or more and 100.0 or less.
   [Mathematical formula 1]

$$A = \cfrac{\text{Number of short chain branches} + 2 \times (\text{Concentration of } \alpha\text{-olefin having 3 to 20 carbon atoms} + \text{Concentration of alkane})}{28 \, / \, (1 + 1/(\frac{\text{Concentration of ethylene}}{\text{Concentration of gas other than hydrocarbon}}) \, ^{\wedge}\text{Polymerization temperature}}} \times \text{Polymerization temperature} \quad \ldots (1)$$

8. The method for manufacturing an ethylene-$\alpha$-olefin copolymer according to claim 7, wherein

   the concentration of a gas other than a hydrocarbon in the formula (1) is a sum of a concentration of hydrogen and a concentration of nitrogen, and
   the concentration of nitrogen is 5.0 mol% or more and 30.0 mol% or less.

9. The method for manufacturing an ethylene-α-olefin copolymer according to claim 7 or 8, wherein the polymerization temperature in the formula (1) is 66°C or higher and 84°C or lower.

10. The method for manufacturing an ethylene-α-olefin copolymer according to claim 7 or 8, wherein the olefin polymerization catalyst is a polymerization catalyst obtained by using, as catalyst components, a solid particulate co-catalyst component obtained by causing at least one co-catalyst component selected from an organoaluminum compound, an organoaluminumoxy compound, a boron compound, and an organozinc compound to be carried on a particulate carrier, and a metallocene complex having a ligand having a structure in which two cyclopentadienyl type anion skeletons are bonded to each other by at least one crosslinking group selected from an alkylene group and a silylene group.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2007023229 A
- JP 2008106264 A

- JP 2009079180 A

**Non-patent literature cited in the description**

- Polymer Analysis Handbook. The Japan Society for Analytical Chemistry, 590